(19) Europäisches Patentamt
European Patent Office
Office européen des brevets

(11) **EP 3 915 396 A1**

(12) **EUROPEAN PATENT APPLICATION**
published in accordance with Art. 153(4) EPC

(43) Date of publication:
01.12.2021 Bulletin 2021/48

(51) Int Cl.:
**A23L 7/126** (2016.01)  **A23L 19/00** (2016.01)
**A23L 33/22** (2016.01)

(21) Application number: 20917698.1

(22) Date of filing: 13.08.2020

(86) International application number:
**PCT/JP2020/030826**

(87) International publication number:
**WO 2021/157109 (12.08.2021 Gazette 2021/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 03.02.2020 JP 2020016533

(71) Applicant: **Mizkan Holdings Co., Ltd.**
**Handa-shi, Aichi 475-8585 (JP)**

(72) Inventor: **YABUSAKI, Masahiro**
**Handa-shi, Aichi 475-8585 (JP)**

(74) Representative: **Mewburn Ellis LLP**
**Aurora Building**
**Counterslip**
**Bristol BS1 6BX (GB)**

(54) **POWDER FOOD CONTAINING INSOLUBLE DIETARY FIBER-CONTAINING FOOD MATERIAL INCLUDING LOCALIZED INSOLUBLE DIETARY FIBER REGIONS, AND BEVERAGE CONTAINING SAID POWDER FOOD**

(57) The present invention relates to a powdery food comprising a foodstuff containing insoluble dietary fibers comprising an insoluble dietary fiber localized site, the powdery food satisfying (1) and (2), and at least one of (3-1) or (3-2):
(1) insoluble dietary fiber content is 5 mass% or more by dry mass;
(2) number average particle size (MN2) of particles in the powdery food after ultrasonication using laser diffraction particle size distribution analyzer in ethanol is below 30 $\mu$m;
(3-1) N ($\alpha$/ $\beta$) is 0.40 or more;
$\alpha$: particle number having unevenness degree below 0.6 and circularity degree below 0.2 by method A;
$\beta$: particle number having unevenness degree below 0.6 and circularity degree below 0.2 by method A;
method A: 10,000 particles of fine particles and/or fine particle composites in the powdery food before ultrasonication are analyzed using particle shape image analyzer in isopropyl alcohol; and
(3-2) regression coefficient a of regression line y = ax + b determined by a least squares method is above 0.35, provided that the circularity degree in a planar particle image measured by method A is one variate x and unevenness degree is the other variate y.

EP 3 915 396 A1

**Description**

Technical Field

The present invention relates to a powdery food and drink containing an insoluble dietary fiber-containing dietary material containing an insoluble dietary fiber localized site in which adhesion feeling to an oral cavity associated with water absorption peculiar to insoluble dietary fiber is suppressed at the time of eating and smoothness of texture is improved, and a food and drink containing the same, and a method for manufacturing thereof.

Background Art

Insoluble dietary fiber has been desired to be eaten in large quantities because of its health function. However, the large size of the insoluble dietary fiber is hard and difficult to swallow, while the small size of the insoluble dietary fiber (particulate containing insoluble dietary fiber, particulate composite, etc.) is increased in specific surface area, the adhesion feeling to the oral cavity due to water absorption peculiar to insoluble dietary fiber is increased at eating, the texture is deteriorated, and swallowing becomes difficult. In particular, even in the same food material, there is coarse density in the distribution of insoluble plant fibers, and particularly for the insoluble dietary fiber localize site, eating property is poor, which has been difficult to use conventionally.

In addition, it has been known that, attempt to improve the eating property by miniaturizing these parts, the adhesion feeling to the oral cavity accompanied by water absorption peculiar to the miniaturized insoluble dietary fiber is remarkably increased, and the smoothness of the texture is greatly impaired.

As a powder composition which facilitates swallowing, a method is known in which the powder composition is added to a gel-like food when the powder composition is used (Patent Literature 1)

There has been also known a method of producing a disintegrating tablet for various foods which can be safely taken by a patient having difficulty in swallowing, an elderly person, a child, and the like using a disintegrating particle composition containing microfibrous cellulose (Patent Literature 2)

Citations

Patent Literatures

[Patent Literature 1] JP 2012-105574
[Patent literature 2] WO 2015/163135

Summary of the Invention

Problem

However, with respect to Patent Literature 1, a technique in which a powder is mixed into a gel-like food and then stirred and stirred with water to improve swallowing property is used, and as a matter of course, a variety of applications to foods using the powder composition cannot be expected. With respect to Patent Literature 2, a technique of imparting disintegration property to a hitting tablet containing microfibrous cellulose is not a technique capable of improving the qualities such as the adhesion feeling to the oral cavity and the smoothness of the texture accompanying the water absorption of the powdery food itself.

The present invention aims to provide a powdery food which contains a foodstuff containing an insoluble dietary fiber, which contains an insoluble dietary fiber localized site, wherein adhesion feeling to an oral cavity associated with water absorption peculiar to an insoluble dietary fiber is suppressed at the time of eating, and a smoothness of a texture is improved.

Solution to Problem

As a result of energetic studies in view of the above circumstances, the present inventors found that, in a powdery food containing insoluble dietary fiber having a specific shape, by containing particles constituting this (fine particles and/or fine particle composites in which these are aggregated) at a constant ratio, the above problem can be easily solved, to complete the present invention.

The present invention provides the following:

[1] A powdery food comprising a foodstuff containing insoluble dietary fibers comprising an insoluble dietary fiber localized site, the powdery food satisfying (1) and (2) and satisfying at least one of (3-1) or (3-2):

(1) an insoluble dietary fiber content is 5 mass% or more in terms of dry mass;
(2) a number average particle size (MN2) of particles in the powdery food after ultrasonication using a laser diffraction particle size distribution analyzer and using ethanol as a measuring solvent is less than 30 $\mu$m;
(3-1) N determined by 'N = $\alpha/\beta$' is 0.40 or more;
$\alpha$: number of particles having a degree of unevenness of 0.6 or less and a degree of circularity of 0.2 or less measured by method A;
$\beta$: number of particles having a degree of unevenness of 0.6 or more and a degree of circularity of 0.2 or less measured by method A;
method A: 10,000 particles of fine particles and/or fine particle composites in the powdery food in a state before ultrasonication are analyzed using a particle shape image analyzer in an isopropyl alcohol solvent; and
(3-2) a regression coefficient a of a regression line y = ax + b determined by a least squares method is more than 0.35, provided that the degree of circularity in a planar particle image measured by the method A is one variate x and the degree of unevenness is the other variate y.

[2] The powdery food according to [1], satisfying both (3-1) and (3-2).

[3] The powdery food according to [1] or [2], wherein a specific surface area per unit volume of the powdery food is 0.05 m$^2$/mL or more after ultrasonication using a laser diffraction particle size distribution analyzer and using ethanol as a measuring solvent.

[4] The powdery food according to any one of [1] to [3], wherein the particles in the powdery food before ultrasonication have a maximum particle size of 50 $\mu$m or more using a laser diffraction particle size distribution analyzer and using ethanol as a measuring solvent.

[5] The powdery food according to any one of [1] to [4], wherein a proportion derived from the insoluble dietary fiber localized site in the insoluble dietary fibers is 5 mass% or more in terms of dry mass.

[6] The powdery food according to any one of [1] to [5], wherein the insoluble dietary fibers comprise the insoluble dietary fibers derived from an edible part and/or an inedible part of the foodstuff containing insoluble dietary fibers.

[7] The powdery food according to any one of [1] to [6], wherein the insoluble dietary fibers comprise insoluble plant fibers derived from the edible part and the inedible part of the same type of foodstuff containing insoluble dietary fibers.

[8] The powdery food according to any one of [1] to [7], wherein the foodstuff containing insoluble dietary fibers is one or more selected from the group consisting of grains, potatoes, pulses, nuts, vegetables, fruits, mushrooms, and algae.

[9] The powdery food according to any one of [1] to [8], wherein the foodstuff containing insoluble dietary fibers is one or more selected from the group consisting of soybean, corn, carrot, pumpkin, pea, broccoli, and cabbage.

[10] The powdery food according to any one of [1] to [9], wherein the powdery food has an amount of available carbohydrate less than 65 mass% in terms of dry mass.

[11] The powdery food according to any one of [1] to [10], wherein the powdery food has a total fat/oil content less than 30 mass% in terms of dry mass.

[12] The powdery food according to any one of [1] to [11], wherein the powdery food comprises 15 mass% or more of the foodstuff containing insoluble dietary fibers including a micronized insoluble dietary fiber localized site.

[13] The powdery food according to any one of [1] to [12], wherein a total content of the foodstuff containing insoluble dietary fibers comprising the insoluble dietary fiber localized site is 30 mass% or more with respect to a total insoluble component.

[14] The powdery food according to any one of [1] to [13], wherein a particle size distribution of the particles in the powdery food before ultrasonication upon measurement using a laser diffraction particle size distribution analyzer and using water as a measuring solvent shows a multimodal particle size distribution.

[15] A food/drink comprising the powdery food according to any one of [1] to [14].

[16] A method for producing the powdery food according to any one of [1] to [14], comprising subjecting a foodstuff containing insoluble dietary fibers comprising an insoluble dietary fiber localized site having a moisture content of 20 mass% or less and a dietary fiber content of 5 mass% or more in terms of dry mass to grinding at a temperature more than 0°C and less than 60°C, until (2), (3-1), and (3-2) of claim 1 are satisfied.

[17] The method for producing the powdery food according to [16], wherein the grinding of the foodstuff containing insoluble dietary fibers is performed until at least one of the following (3-1') or (3-2') is satisfied:

(3-1') the N increases 0.01 or more before and after grinding; and
(3-2') the regression coefficient a increases 0.01 or more before and after grinding.

[18] The method for producing the powdery food according to [16] or [17], wherein the foodstuff containing insoluble dietary fibers comprising an insoluble dietary fiber localized site is a dry powder foodstuff.

[19] The method for producing the powdery food according to any one of [16] to [18], wherein a proportion of a value after grinding (MN2) to a value before grinding (MN1), (MN2/MN1), is 0.1 times or more, in the number average particle size (MN).

[20] The method for producing the powdery food according to any one of [16] to [19], wherein a specific surface area per unit volume of the foodstuff containing insoluble dietary fibers before grinding (cs1) is 0.1 or more after ultrasonication using a laser diffraction particle size distribution analyzer and using ethanol as a measuring solvent.

[21] The method for producing the powdery food according to any one of [16] to [20], wherein a proportion of a specific surface area per unit volume after grinding (cs2) to the specific surface area per unit volume before grinding (cs1) of the foodstuff containing insoluble dietary fibers (cs2/cs1) is 5 times or less after ultrasonication using a laser diffraction particle size distribution analyzer and using ethanol as a measuring solvent.

Advantageous Effect of the Invention

The present invention provides a powdery food containing a foodstuff containing insoluble dietary fibers containing an insoluble dietary fiber localized site, in which the adhesion feeling to the oral cavity caused by water absorption inherent in insoluble dietary fibers is suppressed at the time of eating and the smoothness of texture is improved.

Description of Embodiments

Hereinafter, examples of the embodiments of the present invention will be described, but the present invention is not limited to these aspects, and can be implemented with any modifications without departing from the gist thereof.

In the present invention, the foodstuff containing insoluble dietary fibers is not limited in any way, and typically, it is preferably a plant that is eaten or drunk by human containing an edible part and/or an inedible part thereof, that is, an edible plant. The plant in the present invention may be any plant that is eaten or drunk by human and is not limited in any way, and examples thereof include vegetables, potatoes, mushrooms, fruits, algae, grains, nuts, and pulses. Specifically, it is possible to understand which food corresponds to the edible plant by, for example, referring to grains, potatoes, pulses, nuts, vegetables, fruits, mushrooms, algae, and spices in the classification described in the "Standard Tables of Food Composition in Japan, 2015, (Seventh Revised Version) Supplement, 2018" (see the Food composition tables provided by the Ministry of Health, Labor and Welfare, in particular, Table 1 on page 236). These edible plants may be used alone or in an arbitrary combination of two or more thereof. These edible plants may be directly used or may be used after various treatments (e.g., drying, heating, harshness removal, peeling, seed removal, ripening, salting, and pericarp processing). The classification of a foodstuff can be determined based on the state of the whole plant including the inedible part.

When the foodstuff used in the powdery food of the present invention contains both the edible part and the inedible part, only the edible part may be used, only the inedible part may be used, or both the edible part and the inedible part may be used. In particular, the use of the "inedible part" is preferable because the "inedible part" contains a large amount of insoluble dietary fibers and thus the effects of the present invention are easily exerted.

In the present invention, the "inedible part" of a foodstuff represents a part of the foodstuff which is usually not suitable for drinking and eating or is to be disposed of in usual dietary habits, and the "edible part" represents a part excluding the disposal part (inedible part) from the whole foodstuff. In particular, the foodstuff containing the inedible part is poorly ingestible and has bad compatibility with other foods, and therefore, conventionally has many parts which are not available for eating and to be disposed of in many cases, but in the present invention, such an inedible part can be suitably used.

The edible part and/or the inedible part of the foodstuff used in the powdery food of the present invention may be derived from each single type of foodstuff, or may be an arbitrary combination derived from multiple types of foodstuffs. When the powdery food of the present invention contains both the edible part and the inedible part of a foodstuff, the edible part and the inedible part may be derived from different types of foodstuffs, and it is preferable to contain the edible part and the inedible part each derived from the same type of foodstuff. That is, the use of a part or the whole of the edible part and a part or the whole of the inedible part derived from the same type of foodstuff enables to take nutrients of such a foodstuff without waste.

The insoluble dietary fiber localized site in the present invention may be a part of the "edible part" (e.g., the seed coat part of grains, pulses, nuts, and vegetables, and in particular, the seed coat part of pulses) or the "inedible part (e.g., the core part of corn and the pod part of pulses)" of the foodstuffs described above, and the insoluble dietary fiber localized site is preferably the "inedible part".

Representative examples of the insoluble dietary fiber localized site include the "removed portion (disposal part)" of various foodstuffs described in the Standard Tables of Food Composition in Japan, 2015 (Seventh Revised Edition) (Table 1 shows one example). However, for the "edible part" other than these "inedible parts", the insoluble dietary fiber localized site is also found in the seed coat part of the above grains, pulses, nuts, and vegetables, and particularly hard and thick parts of the stem and leaf part of vegetables.

In the foodstuff used in the present invention, that is, in the foodstuff containing insoluble dietary fibers and/or other foodstuffs (containing no insoluble dietary fiber), the site and the proportion of the inedible part can be naturally understood by those skilled in the art who handle the food or processed food products. For example, the "removed portion (disposal part)" and the "refuse (wastage rate)" described in the Standard Tables of Food Composition in Japan, 2015 (Seventh Revised Edition) (Table 1) can be referred to and considered as the site and the proportion of the inedible part, respectively. The site and the proportion of the edible part can also be understood from the site and the proportion of the inedible part in a foodstuff.

[Table 1]

| Edible plant | Site of inedible part (Removed portion) | Ratio of inedible part (Refuse) |
|---|---|---|
| Vegetables/green soybean/raw | Pod | 45% |
| Vegetables/(corns)/sweetcorn/immature seed, raw | Bract, pistil, and cob | 50% |
| Vegetables/(pumpkins)/Japanese pumpkin/ fruit, raw | Pith, seed, and both ends | 9% |
| Vegetables/(green peppers)/red green pepper/ fruit, raw (paprika) | Stem end, core, and seed | 10% |
| Vegetables/table beet/root, raw | Root tip, skin, and petiole | 10% |
| Vegetables/broccoli/inflorescence, raw | Stem and leaf | 50% |
| Vegetables/(tomatoes)/tomato/fruit, raw | Stem end | 3% |
| Vegetables/(cabbages)/cabbage/head-forming leaf, raw | Core | 15% |
| Vegetables/spinach/leaf, raw | Plant foot | 10% |
| Vegetables/kale/leaf, raw | Petiole bases | 3% |
| Vegetables/(peas)/green pea/raw | Pod | 55% |
| Vegetables/broad bean/immature bean/raw | Seed coat, pod | 80% |
| Vegetables/(carrots)/root, with skin, raw | Root tip and petiole bases | 3% |
| Potatoes and starches/sweet potato/tuberous root/raw | Skin and both ends | 10% |

In the foodstuff containing insoluble dietary fibers which contains the edible part and the inedible part in the present invention, the lower limit of the proportion of the inedible part with respect to the total mass of the edible part and the inedible part in a dry state is preferably 3 mass% or more. It is more preferably 5 mass% or more, and even more preferably 9 mass% or more. On the other hand, the upper limit thereof is usually not limited, and may preferably be 70 mass% or less, more preferably 60 mass% or less, and even more preferably 50 mass% or less.

Examples of vegetables include, but are not limited to, Japanese radish, carrot, rutabaga, parsnip, turnip, black salsify, lotus root, beet (suitably table beet (beetroot): the breed which is improved to use the root of beet for food), arrowhead, eschalot, garlic, rakkyo, lily bulb, kale, onion, asparagus, udo, cabbage, lettuce, spinach, Chinese cabbage, turnip rape, komatsuna, bok choy, Chinese chive, Welsh onions, nozawana, Japanese butterbur, chard (fudanso, Swiss chard), mizuna, tomato, eggplant, pumpkin, green pepper, cucumber, Japanese ginger, cauliflower, broccoli, edible chrysanthemum, bitter melon, okra, artichoke, zucchini, sugar beet, tigernut, ginger, shiso, wasabi, paprika, herbs (watercress, coriander, water morning glory, celery, tarragon, chives, chervil, sage, thyme, laurel, parsley, mustard greens (karashina), mugwort, basil, oregano, rosemary, peppermint, savory, lemongrass, dill, wasabi leaf, Japanese pepper leaf, stevia), bracken, zenmai, and bamboo shoot. Among them, carrot, pumpkin, cabbage, onion, broccoli, asparagus, spinach, and kale are preferable, and carrot, pumpkin, and broccoli are particularly preferable.

Examples of potatoes include, but are not limited to, sweet potato, cassava, yacon, taro, satoimo, konjac, tashiroimo (Polynesian arrowroot), potato, purple sweet potato, Jerusalem-artichoke, katakuri, yam, Japanese yam, Chinese yam, and kudzu. Among them, purple sweet potato, sweet potato, and the like are particularly preferable.

Examples of mushrooms include, but are not limited to, shiitake mushroom, matsutake, Jew's ear, maitake, sarunokoshikake, oyster mushroom, King oyster mushroom, enokitake, shimeji, naratake, mushroom, nameko, Jersey cow mushroom, hatsutake, and chichitake.

Examples of fruits include, but are not limited to, Chinese quince, Chinese white pear (white pear, Chinese pear), nashi pear, quince, medlar, juneberry, shipova, apple, American cherry (black cherry, dark cherry), apricot, Japanese apricot, cherry (sweet cherry), sour cherry, blackthorn, Japanese plum, peach, ginkgo, chestnuts, akebia, fig, persimmon, cassis (blackcurrant), bramble, kiwifruit (kiwi), gummy, mulberry (dodome), cranberry (American cranberry), cowberry (iwamomo, hamanashi, okamaringo), pomegranate, Hardy kiwi (shirakuchizuru, kokuwa), sea buckthorn (saji, hippophae, seaberries), gooseberry, jujube, Japanese bush cherry (koume, ikuri), haskap (honeyberry), bilberry, redcurrant, grape, blackberry, blueberry, pawpaw, matsubusa, raspberry, downy cherry, mandarin orange, kumquat, trifoliate orange, olive, loquat, red bayberry, monkfruit, tropical fruits (tropical fruits such as mango, mangosteen, papaya, cherimoya, atemoya, banana, durian, carambola, guava, pineapple, acerola, passion fruit, pitaya, lychee, and canistel), strawberry, water melon, melon, avocado, miracle fruit, orange, lemon, prune, yuzu, sudachi, grapefruit, bitter orange, and flat lemon.

Examples of algae include, but are not limited to, macroalgae such as kombu, wakame, nori, green laver, and tengusa; and microalgae such as green algae, red algae, blue-green algae, dinoflagellate, and Euglena. Specific examples thereof include, sea lettuce, green laver, perforated sea lettuce, sea grapes (green caviar), katashiokusa, green caviar, kuromiru, tamamiru, torinoashi (yuikiri), hitoegusa, hiraaonori, fusaiwazuta, grass kelp, akamoku, amijigusa, arame, antokume, ishige, ichimegasa, iroro, iwahige, umitoranoo, sea fan, oobamoku, Okinawa-mozuku, kaigaraamanori, kagomenori, kajime (arame), kayamonori, gibasa (akamoku, ginbaso, jinbaso, jibasa), sanadagusa, shiwanokawa, shiwayahazu, seiyo habanori, tsuruarame, nanori (kayamonori), nebarimo, nokogirimoku, habanori, hijiki, hirome, fukuronori, futomozuku, hondawara, ma-kombu, matsumo, mugiwaranori (kayamonori), muchimo, moduku (mozuku), yuna, wakame, Asakusa nori, ibotsunomata, ushikenori, usukawakaninote, ezotsunomata (kurohaginnanso), oobusa, ogonori, okitsunori, obakusa, katanori, kabanori, kamogashiranori, kijinoo, kurohaginnanso (ezotsunomata), sakuranori, shiramo, tanbanori, tsunomata, tsurushiramo, tsurutsuru, tosakanori, tosakamatsu, nogenori (fukuro funori), nori (susabinori), hanafunori, harigane, hiragaragara, hirakusa, hiramukade, pirihiba, fukuro funori, fushitsunagi, makusa, maruba amanori, mitsudesozo, euglena, chlorella, mirin, mukadenori, yuikiri, yukari, and tengusa. Among these algae, some of microalgae such as chlorella have a significantly strong cell wall, and thus, it is preferable to utilize microalgae after being subjected to a pretreatment to disrupt the cell wall, or use algae other than microalgae.

Examples of nuts include, but are not limited to, almond, cashew nut, pecan nut, macadamia nut, pistachio, hazel nut, coconut, pine nut, sunflower seed, pumpkin seed, watermelon seed, chinquapin, walnut, chestnuts, ginkgo, sesame, and Brazil nut. Among them, almond, cashew nut, macadamia nut, pistachio, hazelnut, coconut, and the like are preferable.

Examples of pulses include, but are not limited to, common bean, kidney bean, red common bean, white common bean, black bean, pinto bean, toramame, lima bean, scarlet runner bean, peas (e.g., yellow pea, white pea, green pea, marrowfat pea, and in particular, green pea which is an unripe seed obtained by harvesting the seed with pods in an unripe state and whose bean exhibits a green appearance), pigeon pea, mung bean, cow pea, adzuki bean, broad bean, soybean (in particular, green soybean), chickpea, Lens culinaris, hiramame, lentil, peanut, lupin bean, grass pea, locust bean (carob), petai bean, African locust bean, coffee bean, cocoa bean, and Mexican jumping bean. Some of the foodstuffs in which the edible part (e.g., green soybean and green pea) is handled as a vegetable can be determined from the state of the whole plant (e.g., soybean and pea) combined with the inedible part (e.g., pod) whether the foodstuff belongs to pulses. Among them, pea (in particular, green pea which is an unripe seed obtained by harvesting the seed with pods in an unripe state and whose bean exhibits a green appearance), soybean (in particular, green soybean which is an unripe seed of soybean obtained by harvesting the soybean with pods in an unripe state and whose bean exhibits a green appearance), and broad bean are preferable, and soybean (in particular, green soybean which is an unripe seed of soybean obtained by harvesting the soybean with pods in an unripe state and whose bean exhibits a green appearance) is particularly preferable.

Examples of grains include, but are not limited to, corn (in particular, sweetcorn is preferable), rice, common wheat, barley, sorghum, common oat, triticale, rye, buckwheat, fonio, quinoa, Japanese barnyard millet, foxtail millet, proso millet, giant corn, sugar cane, and amaranth. Among them, corn (in particular, sweetcorn is preferable) and giant corn are preferable.

The powdery food of the present invention may be prepared by subjecting the foodstuff containing insoluble dietary fibers as mentioned in the above various edible plants and the like to drying. As the drying method, an arbitrary method that is generally used in drying of foods can be used. Examples thereof include sun drying, shade drying, freeze drying, air drying (e.g., hot air drying, fluidized bed drying method, spray drying, drum drying, and low temperature drying), pressure drying, reduced-pressure drying, microwave drying, and oil heat drying. Among them, a method involving air drying (e.g., hot air drying, a fluidized bed drying method, spray drying, drum drying, or low temperature drying), or freeze drying is preferable in view of a small degree of change in color tone or flavor inherent in the foodstuff and being able to control the non-food aroma (e.g., burnt odor).

The 'dry' state in the present invention refers to a state where the moisture content is about 20 mass% or less and the water activity value is 0.85 or less. In the present invention, the term "in terms of dry mass" refers to an equivalent value to the mass when the moisture content is 0 mass%.

In quantitative of moisture content (wet basis moisture content), a method involving subjecting a powdery food and a foodstuff containing insoluble dietary fibers as mentioned in the above various edible plants and the like to heat drying under reduced pressure. The value thereof is measured by warming to 90°C by heat drying under reduced pressure in accordance with the Standard Tables of Food Composition in Japan, 2015 (Seventh Revised Edition). Specifically, an appropriate amount of a sample is collected in a scale container previously adjusted to a constant weight ($W_0$) and is measured ($W_1$). Under ordinary pressure, the scale container with the lid removed or the aperture open is put in an electric dryer that enables a constant temperature and reduced pressure, the electric dryer being adjusted to predetermined temperature (more specifically, 90°C). The door is closed, the vacuum pump is operated, and drying is performed at a predetermined degree of reduced pressure for a predetermined period of time. The vacuum pump is stopped, the pressure is returned to ordinary pressure by sending dry air, the scale container is taken out, the lid is put on the container, and after allowing to cool in a desiccator, the mass is weighed. The drying, cooling, and weighing of the mass are repeated until a constant weight ($W_2$) is reached, and the moisture content (mass%) is determined by the following equation.

[Equation 1]

$$\text{Moisture (g/100 g)} = (W_1 - W_2)/(W_2 - W_0) \times 100$$

[wherein, $W_0$ represents a mass (g) of the scale container adjusted to constant weight, $W_1$ represents a mass (g) of the scale container containing a sample before drying, and $W_2$ represents a mass (g) of the scale container containing the sample after drying.]

The water activity value is a numerical value representing the proportion of free water in a food and is used as an indicator of the preservability of a food. Specifically, it is the value obtained by dividing the equilibrium vapor pressure (p) in the headspace on a sample by the vapor pressure (p0) of water at the same temperature, and in other words, is the value obtained by dividing the equilibrium relative humidity (ERH) in the headspace by 100. The water activity value can be measured with a general water activity measuring device (e.g., "LabMaster-aw NEO" manufactured by Novasina AG, employing an electric resistance based (electrolyte based) humidity sensor).

In the powdery food in the present invention, the method of crushing used for pulverization is not particularly limited. The temperature at the time of crushing is also not limited, and any of high-temperature crushing, ordinary-temperature crushing, or low-temperature crushing may be performed. The pressure at the time of crushing is also not limited, and any of high-pressure crushing, ordinary-pressure crushing, and low-pressure crushing may be performed. Examples of the apparatus for such crushing include apparatuses, such as a blender, a mixer, a mill, a kneader, a grinder, a crusher, and an attritor, and any of these apparatuses may be used. For the apparatus thereof, for example, a medium agitation mill such as a dry bead mill and a ball mill (such as tumbling and vibrating), a jet mill, a high-speed rotation impact mill (such as a pin mill), a roll mill, a hammer mill, and the like can be used.

The powdery food of the present invention contains a foodstuff containing insoluble dietary fibers containing an insoluble dietary fiber localized site. For the foodstuff containing insoluble dietary fibers containing an insoluble dietary fiber localized site, the insoluble dietary fiber localized site and other sites in the foodstuff may be separately contained, or the foodstuff in a state of containing the insoluble dietary fiber localized site may be contained. The insoluble dietary fiber localized site in the present invention represents the site where the insoluble dietary fiber content is higher than that in the edible part of the foodstuff, and where the insoluble dietary fiber content is preferably 1.1 times or more, more preferably 1.2 times or more, further more preferably 1.3 times or more, even more preferably 1.4 times or more, even more preferably 1.5 times or more, even more preferably 1.6 times or more, even more preferably 1.7 times or more, even more preferably 1.8 times or more, even more preferably 1.9 times or more, and most preferably 2.0 times or more than that in the edible part in a dry state. For example, in corn in which the dietary fiber content in the edible part (seeds) is 10 mass% and the dietary fiber content of the core part as the insoluble dietary fiber localized site (and as the inedible part) is 55 mass%, the insoluble dietary fiber content is 5.5 times of that of the edible part; in pea in which the dietary fiber content of the edible part (cotyledon) is 7.5 mass% and the dietary fiber content of the seed coat part as the insoluble dietary fiber localized site is 20 mass%, the insoluble dietary fiber content is 2.5 times of that of the edible part; and in green soybean in which the dietary fiber content of the edible part (seeds) is 19 mass% and the dietary fiber content of the pod part as the insoluble dietary fiber localized site (and as the inedible part) is 61 mass%, the insoluble dietary fiber content is 3.2 times of that of the edible part.

The insoluble dietary fiber content in the insoluble dietary fiber localized site is usually more than 10 mass%, preferably more than 11 mass%, more preferably more than 12 mass%, further more preferably more than 13 mass%, even more preferably more than 14 mass%, even more preferably more than 15 mass%, even more preferably more than 16 mass%, even more preferably more than 17 mass%, even more preferably more than 18 mass%, even more preferably more than 19 mass%, and even more preferably more than 20 mass% in terms of dry mass. The lower limit of the proportion of the insoluble dietary fiber localized site with respect to the total mass of the whole foodstuff is preferably 3 mass% or more in terms of dry mass. It is preferably 5 mass% or more, and more preferably 9 mass% or more. On the other hand, the upper limit thereof is usually not limited, and may preferably be 70 mass% or less, more preferably 60 mass% or less, and even more preferably 50 mass% or less.

Since the powdery food of the present invention contains more than a certain amount of insoluble dietary fibers, the effects of suppressing the adhesion feeling to the oral cavity caused by water absorption inherent in insoluble dietary fibers at the time of eating, which is the problem to be solved by the present invention, are exerted. Specifically, the insoluble dietary fiber content in the powdery food of the present invention may usually be 5 mass% or more, and is above all preferably 6 mass% or more, even more preferably 8 mass% or more, preferably 9 mass% or more, and particularly preferably 10 mass% or more in terms of dry mass. Since the problem to be solved by the present application is not serious for foods in which the insoluble dietary fiber content is less than 5 mass%, the present invention cannot be usefully employed. The upper limit of the dietary fiber content is preferably 90 mass% or less, more preferably 80 mass% or less, more preferably 70 mass% or less, more preferably 60 mass% or less, and even more preferably 50 mass% or less, in terms of dry mass.

The proportion of the insoluble dietary fibers in the powdery food of the present invention, which are derived from the insoluble dietary fibers in a state contained in the edible part and the insoluble dietary fiber localized site (in particular, the inedible part) of a raw material is preferably 30 mass% or more, more preferably 50 mass% or more, more preferably 70 mass% or more, more preferably 90 mass% or more, and most preferably 100 mass% in terms of dry mass. Further, the proportion of the insoluble dietary fibers in the powdery food of the present invention which are derived from the insoluble dietary fibers in a state contained in the insoluble dietary fiber localized site is preferably 5 mass% or more, more preferably 10 mass% or more, more preferably 20 mass% or more, more preferably 30 mass% or more, more preferably 40 mass% or more, and more preferably 50 mass% or more in terms of dry mass.

As the method for quantitatively measuring dietary fibers such as insoluble dietary fibers, a general modified Prosky method can be used.

In the present invention, the content of the foodstuff containing insoluble dietary fibers with respect to the whole of the powdery food is preferably within a predetermined range. For example, the content of the foodstuff containing insoluble dietary fibers with respect to the whole of the powdery food is preferably 30 mass% or more, more preferably 50 mass% or more, further more preferably 70 mass% or more, even more preferably 90 mass% or more, and particularly preferably 100 mass% in terms of dry mass. Fine particles (having a d50 after ultrasonication measured by using ethanol as a solvent of 1000 $\mu$m or less) derived from the foodstuff containing insoluble dietary fibers with respect to the whole of the powdery food is preferably 15 mass% or more, preferably 30 mass% or more, more preferably 50 mass% or more, further more preferably 70 mass% or more, even more preferably 90 mass% or more, and particularly preferably 100 mass% in terms of dry mass. In a powdery food in which the content of a sucrose-containing plant with respect to the whole of the powdery food is not 100 mass% in terms of dry mass, the type of other powder is not limited in any way as long as the effects of the present invention are not impaired. Any powdered food material can be appropriately selected according to the desired flavor and quality for the final powdery food without any limitation on the type, the combination thereof, and the use. As such a powdered food material, for example, sodium chloride, sucrose, and dextrin can be mentioned.

As the foodstuff containing insoluble dietary fibers containing an insoluble dietary fiber localized site, a foodstuff in which the content of available carbohydrate is less than a predetermined value is preferably used from the viewpoint that a paste is unlikely to be formed by grinding, and as a result, a powdery food with good quality can be obtained. When a powdery food is obtained by subjecting a dried foodstuff or a powdery dried foodstuff as the foodstuff containing insoluble dietary fibers containing an insoluble dietary fiber localized site to grinding as described below, the content of available carbohydrate after drying is preferably less than the upper limit value. Specifically, the content of available carbohydrate of the raw material of the powdery food and/or powdery food of the present invention may usually be less than 65 mass%, above all preferably less than 60 mass%, above all preferably less than 55 mass%, above all preferably less than 50 mass%, above all preferably less than 45 mass%, more preferably less than 40 mass%, further preferably less than 35 mass%, and particularly preferably less than 30 mass% in terms of dry mass. Although the lower limit thereof is not particularly limited, it is preferably 0 mass% or more, more preferably 5 mass% or more, further more preferably 10 mass% or more, still more preferably 15 mass% or more, and even more preferably 20 mass% or more in terms of dry mass.

The content of available carbohydrate in the foodstuff means the total value of the directly analyzed components (starch, glucose, fructose, sucrose, maltose, lactose, galactose, and trehalose) in the carbohydrates measured in accordance with the method described in the Standard Tables of Food Composition in Japan, and "% (monosaccharide equivalent g/100 g)" can be used as the unit thereof.

As the foodstuff containing insoluble dietary fibers containing an insoluble dietary fiber localized site, a foodstuff in which the total fat/oil content is less than a predetermined value is preferably used from the viewpoint that a paste is unlikely to be formed by grinding, and as a result, a powdery food with good quality can be obtained. When a powdery food is obtained by subjecting a dried foodstuff or a powdery dried foodstuff as the foodstuff containing insoluble dietary fibers containing an insoluble dietary fiber localized site to grinding as described below, the total fat/oil content after drying is preferably less than the upper limit value. Specifically, the total fat/oil content of the raw material of the powdery food and/or powdery food of the present invention may usually be less than 30 mass%, above all preferably less than 25 mass%, more preferably less than 20 mass%, further preferably less than 15 mass%, and particularly preferably less than 10 mass% in terms of dry mass. Although the lower limit thereof is not particularly limited, it is preferably 0 mass% or more, more preferably 1 mass% or more, and more preferably 2 mass% or more in terms of dry mass.

The total fat/oil content means the content of the fat/oil derived from all components including all foodstuffs contained in the powdery food and can be measured by Soxhlet extraction using diethyl ether in accordance with the method described in the Standard Tables of Food Composition in Japan.

In the powdery food in the present invention, the method of grinding of the foodstuff containing insoluble dietary fibers containing an insoluble dietary fiber localized site to be performed is not particularly limited. In the present invention, grinding refers to a process allowing to mill the object to be ground between a grinding medium and a machine wall or between grinding media by the friction therebetween to form a predetermined shape. Specific examples of the method of grinding include a stone type mill allowing grinding by adjusting the gap width between the upper and lower mill portions; a disc mill allowing grinding by adjusting the gap width between the crushing disc and the wall surface or two opposite crushing discs; and a roll mill allowing grinding by adjusting the gap width between the roll and the wall surface or rolls (these differ by grinding methods. For example, a grinding method which is at once a stone-type and disc-type, in which two opposite crushing discs serve as mill may also be employed). When these mills are used, it is preferable to grind the raw materials with the gap width adjusted such that the micronization degree can be a certain degree or less. More specifically, the gap width is preferably less than 1,000 $\mu$m, more preferably less than 800 $\mu$m, further more preferably less than 600 $\mu$m, even more preferably less than 500 $\mu$m, and most preferably less than 400 $\mu$m (it is preferable to set the gap width larger than the maximum particle size in the case where no ultrasonication of ground product is performed). The lower limit of the gap width is not particularly limited, and is preferably 1 $\mu$m or more, and preferably 10 $\mu$m or more.

Regarding the temperature at the time of grinding, the process is preferably performed under low temperature conditions in which an increase in temperature caused by heat generated during the process is suppressed. More specifically, the upper limit of the grinding temperature of the present invention is less than 60°C, and is preferably less than 55°C, even more preferably less than 50°C, and most preferably less than 45°C. For the upper limit temperature thereof, it is preferable that the temperature of the object to be ground is lower than the above temperature for the majority of the time during grinding because flake-like pieces having shape features of a low degree of circularity and a low degree of unevenness are likely to be formed, and it is further preferable that the temperature of the object to be ground is lower than the above temperature throughout the whole grinding. In particular, the temperature difference between the object to be ground before grinding and the ground object after grinding (the product temperature after grinding (°C) - the product temperature before grinding (°C)) is preferably less than 10°C. The lower limit of the grinding temperature is more than 0°C, and is even more preferably more than 5°C, and most preferably more than 10°C. For the lower limit temperature, it is preferable that the temperature of the object to be ground is higher than the lower limit temperature for the majority of the time during grinding because condensation is unlikely to occur on the object to be ground, and it is even more preferable that the temperature of the object to be ground is higher than the above temperature throughout the whole grinding the object to be ground.

The degree of micronization of the object to be ground resulting from grinding is preferably a certain degree or less because a powdery food can be obtained in which particle characteristics of the object to be ground immediately have the features defined in the present invention and flavor deterioration accompanying with grinding time is thereby suppressed. Specifically, for the number average particle size (MN) in the case of assuming that all the particles are spherical in a powdery food after ultrasonication of the powdery food using the laser diffraction particle size distribution analyzer described below and using ethanol as a measuring solvent, the proportion of a value after grinding (MN2) to a value before grinding (MN1), (MN2/MN1) is preferably 0.1 time or more, more preferably 0.2 time or more, even more preferably 0.3 time or more, even more preferably 0.4 time or more, even more preferably 0.5 time or more, even more preferably 0.6 time or more, and even more preferably 0.7 time or more. Although the upper limit of the MN2/MN1 is not particularly limited, it is preferably 3.0 times or less, above all preferably 2.5 times or less, even more preferably 2.0 times or less, even more preferably 1.5 times or less, and particularly preferably 1.0 time or less.

The difference between the number average particle size of the particles in the object to be ground (the foodstuff containing insoluble dietary fibers containing an insoluble dietary fiber localized site) before grinding (MN1) and the number average particle size of the particles in the object to be ground after grinding (MN2), (MN1 - MN2) is preferably less than 20 μm, and preferably less than 15 μm. The lower limit thereof is not particularly limited, but is preferably more than 0.1 μm.

After ultrasonication of the particles in the object to be ground before grinding using the laser diffraction particle size distribution analyzer and using ethanol as a measuring solvent, the number average particle size (MN1) in the case of assuming that all the particles are spherical is preferably less than 50 μm, preferably less than 40 μm, preferably less than 30 μm, preferably less than 20 μm, more preferably less than 15 μm, and preferably less than 10 μm. The lower limit thereof is not particularly limited, and is preferably more than 0.1 μm.

The smaller the particles are, the larger the specific surface area per unit volume of the object to be ground (cs) is, and thus the proportion of the specific surface area of the object to be ground after grinding (cs2) to the specific surface area of the object to be ground before grinding (cs1) and/or the difference therebetween is preferably a certain degree or less. Specifically, after ultrasonication of the object to be ground using the laser diffraction particle size distribution analyzer described below and using ethanol as a measuring solvent, the proportion of the specific surface area per unit volume of the object to be ground before grinding (cs2) to the specific surface area per unit volume of the object to be ground before grinding (cs1), (cs2/cs1) is preferably 5 times or less, even more preferably 4 times or less, even more preferably 3 times or less, and even more preferably 2 times or less. The lower limit thereof is not particularly limited, and is preferably 0.1 time or more, and more preferably 0.3 time or more.

After ultrasonication of the object to be ground before grinding using the laser diffraction particle size distribution analyzer and using ethanol as a measuring solvent, the specific surface area per unit volume before grinding (cs1) is preferably 0.1 or more, more preferably 0.15 or more, and even more preferably 0.20 or more. The upper limit of the cs1 is not particularly limited, and is preferably less than 2.0, and more preferably less than 1.0.

In the present invention, the specific surface area per unit volume (cs, $m^2$/mL) refers to the specific surface area per unit volume (1 mL) in the case of assuming that the particles measured using the laser diffraction particle size distribution analyzer described below are spherical. The specific surface area per unit volume in the case of assuming that the particles are spherical is a numerical value based on the measurement mechanism which is different from that of the measured value (the specific surface area per volume or per mass required in a transmission method, a gas adsorption method, etc.) reflecting the components, the surface structure, and the like of the particles. The specific surface area per unit volume in the case of assuming that the particles are spherical is determined by $6 \times \Sigma(ai) \div \Sigma(ai \cdot di)$, provided that the surface area per particle is ai and the particle size is di.

The difference between the specific surface area per unit volume of the object to be ground before grinding (cs1) and the specific surface area per unit volume of the object to be ground after grinding (cs2), (cs2 - cs1) is preferably 0.4 $m^2$/mL or less, even more preferably 0.3 $m^2$/mL or less, and preferably 0.2 $m^2$/mL or less. The lower limit thereof is not particularly limited, and is usually more than 0 $m^2$/mL.

It is considered that such grinding relatively decreases fibrous pieces having shape features of a low degree of circularity and a high degree of unevenness and relatively increases flake-like pieces having shape features of a low degree of circularity and a low degree of unevenness in the object to be ground as the raw material, so that the characteristics of the powdery food of the present invention having special shape features defined in the present invention are imparted. The pressure at the time of grinding is not particularly limited, and any of high pressure, ordinary pressure, low pressure may be employed. Such grinding may be performed either under wet conditions or under dry conditions, but grinding under dry conditions is preferable. Any apparatus for grinding may be used as long as it enables to mill the object to be ground between a grinding medium and a machine wall or between grinding media by the friction therebetween to have a predetermined shape. The dry grinding is preferably performed under conditions where the degree of micronization of the object to be ground resulting from the grinding mentioned above is a certain degree or less.

Since the powdery food of the present invention contains fine particles and/or fine particle composites derived from a foodstuff containing insoluble dietary fibers with a specific shape in certain proportions, the adhesion feeling to the oral cavity caused by water absorption inherent in insoluble dietary fibers can be improved. As the index thereof, it is preferable to contain a certain number or more of particles having a specific form in the powdery food before ultrasonication. That is, when 10,000 fine particles and/or fine particle composites derived from a foodstuff containing insoluble dietary fibers in the powdery food in the state before ultrasonication are analyzed using a particle shape image analyzer in an isopropyl alcohol solvent (method A), it is preferable that the number of particles having a degree of circularity in a planar particle image of 0.2 or less (that is, particles having complex shape features, whose shape is different from a perfect circle to a certain degree) and a degree of unevenness of 0.6 or more (also referred to as the α; the number of particles whose unevenness around particles in the image are small to a certain degree and whose texture is smooth) is relatively decreased because the smoothness of texture of the powder is improved, and it is preferable that the number of particles having a degree of circularity in a planar particle image of 0.2 or less and a degree of unevenness of 0.6 or less (also referred to as the β; the number of particles whose unevenness around particles in the image are large to a certain degree and which are convoluted) is relatively high because the adhesion feeling to the oral cavity caused by water absorption of the powdery food is improved. It is not clear how the fine particle composites having the shape are formed, but for example, grinding of a foodstuff containing insoluble dietary fibers (more preferably, as mentioned above, grinding is preferably performed under conditions where the degree of micronization of the object to be ground resulting from the grinding is a certain degree or less, and further, grinding is most preferably dry grinding) relatively reduces the fibrous pieces having shape features of a low degree of circularity and a high degree of unevenness and relatively increases the flake-like pieces having shape features of a low degree of circularity and a low degree of unevenness, which can result in imparting special shape features defined in the present invention. The finding that useful effects like the present invention can be obtained by grinding under such special conditions until obtaining specific shape characteristics has not conventionally been known at all.

Specifically, the powdery food of the present invention preferably satisfies either condition 1 or condition 2 below which is derived from the measurement using the method described below because the effects of the present invention are exerted, and further, both condition 1 and condition 2 are more preferably satisfied. Specifically, both (3-1) and (3-2) are preferably satisfied, or (3-1') or (3-2') is also preferably satisfied.

(Condition 1) N (N = $\alpha / \beta$) is 0.40 or more (sometimes referred to as (3-1)).

The N is more preferably 0.50 or more, more preferably 0.60 or more, even more preferably 0.70 or more, even more preferably 0.80 or more, even more preferably 0.90 or more, and most preferably 1.00 or more. The upper limit thereof is not particularly limited, and is preferably 10 or less.

In the production of the powdery food of the present invention, grinding is preferably performed until the N increases 0.01 or more from before to after grinding, grinding is more preferably performed until it increases 0.03 or more, grinding is more preferably performed until it increases 0.05 or more, grinding is more preferably performed until it increases 0.07 or more, and grinding is more preferably performed until it increases 0.09 or more. Further, grinding is preferably performed until the N of the final powdery food (N = $\alpha / \beta$) reaches the above defined range (sometimes referred to as (3-1')).

(Condition 2) A regression coefficient a of a regression line y = ax + b determined by a least squares method is more than 0.35, provided that the degree of circularity in each planar particle image is one variate x and the degree of unevenness is the other variate y, (sometimes referred to as (3-2)).

The regression coefficient a is more preferably 0.36 or more, even more preferably 0.37 or more, even more preferably 0.38 or more, even more preferably 0.39 or more, and most preferably 0.40 or more. The upper limit thereof is not particularly limited, and is preferably 1.0 or less, preferably 0.90 or less, preferably 0.80 or less, and preferably 0.70 or less.

When the proportion of the particles having a shape of a low degree of circularity and a low degree of unevenness, the intercept b of the regression line tends to decrease. Thus, the intercept b is preferably 0.65 or less, even more preferably 0.60 or less, even more preferably 0.55 or less, and most preferably 0.50 or less. The lower limit thereof is not particularly limited, and is preferably 0.30 or more.

When the proportion of the particles having the shape of a low degree of circularity and a low degree of unevenness, the correlation coefficient of the regression line tends to increase. Thus, the correlation coefficient is preferably 0.80 or more, more preferably 0.85 or more, further more preferably 0.87 or more, even more preferably 0.89 or more, and most preferably 0.90 or more. The upper limit thereof is not particularly limited, and is preferably 1.0 or less.

In the production of the powdery food of the present invention, grinding is preferably performed until the regression coefficient a increases by 0.01 or more from before to after grinding, grinding is more preferably performed until it increases by 0.03 or more, grinding is more preferably performed until it increases by 0.05 or more, and grinding is more preferably performed until it increases by 0.07 or more. Further, grinding is preferably performed until the regression coefficient a of the final powdery food reaches the above defined range (sometimes referred to as (3-2')).

As the particle shape image analyzer used in planar image analysis in the particle shape image analyzer when analyzing the "number of particles with a specific shape" derived from a foodstuff containing insoluble dietary fibers in the powdery food before ultrasonication of the present invention, one on which a high pixel camera (specifically, an imaging camera capable of capturing planar images, in which fine particles and fine particle composites are present, in more detail than those having a number of effective pixels of 1920 (H) $\times$ 1080 (V) and a pixel size of 2.8 $\mu$m $\times$ 2.8 $\mu$m) is installable (e.g., PITA-4 manufactured by SEISHIN ENTERPRISE Co., Ltd.) is used among particle analyzers using dynamic image analysis which flows a particulate material suspension into flow cell, automatically determines the particles entered into the imaging field and analyzes them, can thereby randomize the particles and automatically obtain a large amount of individual particle information in a short time.

Specifically, a camera which can capture detailed fine particle and fine particle composite images is required in the measurement of the degree of unevenness, the degree of circularity, and the like of the fine particles and fine particle composites derived from a foodstuff containing insoluble dietary fibers in the powdery food before ultrasonication, and as the camera for capturing images, it is preferable to use an imaging camera (CCD camera or C-MOS camera) capable of capturing planar images, in which fine particles and fine particle composites are present, in more detail than the number of effective pixels of 1920 (H) $\times$ 1080 (V) and pixel size of 2.8 $\mu$m $\times$ 2.8 $\mu$m, and for example, DMK33UX290 (manufactured by The Imaging Source) can be used. As the objective lens for capturing images, one having a magnification of 4 times is used, and fine particle and fine particle composite images are captured while flowing a sample at an appropriate flow rate. In particular, for the shape of the flow cell, a planar elongation cell which increases a planar elongation effect and allows the center of most fine particles and fine particle composites in the powdery food before ultrasonication to pass through a focus range of a lens is used, so that exact morphological characteristics can be grasped. When capturing images, the conditions of a particle image analyzer is set to an extent that the focus is appropriately set, particle shapes can be obviously confirmed, and a contrast to the background enables to clearly distinguish the fine particles and fine particle composites in the powdery food before ultrasonication from the background. For example, when an 8-bit gray scale imaging camera (0 is black and 255 is white) is used as an analysis condition setting example for obtaining fine particle and fine particle composite images, planar images are obtained at an LED intensity of 100 and a camera gain of 100 db, and thereafter, 10,000 or more images of individual fine particle or fine particle composite images are captured at a brightness level of the fine particle and fine particle composite images present in the planar images of 115 and a contour level of the images of 160, which can be subjected to morphological characteristics analysis. As the solvent and carrier liquid at the time of measurement, those suitable for the measurement object can be used, and for example, when the particle shape in an oil based crushed paste is measured, the measurement is performed using isopropyl alcohol (IPA). Specifically, a sample is diluted to 1,000-fold with a solvent used in measurement, injected into a cell for particle image measurement (synthetic quartz glass), and can be subjected to the fine particles and fine particle composite shape image analysis. Image capturing is carried out until the number of fine particles and fine particle composites reaches 10,000 samples. For the captured planar images of 1,920 pixels × 1,080 pixels (pixel size 2.8 $\mu$m × 2.8 $\mu$m), the degree of unevenness and the degree of circularity of the fine particle and fine particle composite images having a minimum pixel number of 15 pixels or more present in the planar images are measured for each of 10,000 images.

The degree of unevenness is a value representing the degree of unevenness around particles in the images in the fine particle or fine particle composite images formed by vertically, laterally, or diagonally connecting adjacent pixels, and can be determined by "circumference length when tops of the projections of a specific fine particle or fine particle composite image are joined by the shortest distance/contour length of the specific fine particle or fine particle composite image". A smaller value is obtained when the fine particle or fine particle composite image has a larger unevenness. The degree of circularity is a value that is smaller as the shape of a specific fine particle or fine particle composite image is away from the perfect circle, and can be determined by "circumference length of a perfect circle having the same area as the area of a specific fine particle or fine particle composite image/contour length of the specific fine particle or fine particle composite image". A smaller value is obtained when the shape of the fine particle or fine particle composite image is more complex.

Regarding the measurement conditions of the image analysis of the shape of the aforementioned fine particles and fine particle composites, measurement is carried out in a state where a captured image is well focused because the shape thereof cannot be correctly measured without appropriately adjusting the focus of the captured image.

The setting of the measurement conditions may vary by the measurement of samples, it is desired to measure after appropriately readjusting the conditions at every time of measurement.

That is, a preferred method for measuring the degree of unevenness and degree of circularity of the fine particles or fine particle composites derived from a foodstuff containing insoluble dietary fibers in the powdery food before ultrasonication in the present invention is as follows.

Planar images of 1,920 pixels × 1,080 pixels (pixel size 2.8 $\mu$m × 2.8 $\mu$m) are captured using a flow cell-type particle shape image analyzer, isopropyl alcohol as a measuring solvent, and 4 times objective lens, and the degree of unevenness and degree of circularity of individual "fine particle or fine particle composite image (an image formed by connecting vertically, laterally, or diagonally adjacent pixels; as a result, multiple fine particles and fine particle composites are counted as one image)" having a minimum pixel number of 15 pixels or more present in the planar images are measured:

degree of unevenness: circumference length when tops of the projections of a specific fine particle or fine particle composite image are joined by the shortest distance/contour length of the specific fine particle or fine particle composite image; and

degree of circularity: circumference length of a perfect circle having the same area as the area of a specific fine particle or fine particle composite image/contour length of the specific fine particle or fine particle composite image.

Among fine particles and/or fine particle composites before ultrasonication, 10,000 particles/cm$^3$ or more of fine particles and/or fine particle composites which satisfy the particle size of 2.3 $\mu$m to 1,600 $\mu$m are contained in the powdery food of the present invention. The powdery food which contains a fewer number of particles than the above before ultrasonication is not preferable because the effects of the present invention are not sufficiently achieved. The number of particles contained can be measured by using the measurement method for planar particle image analysis in the particle shape image analyzer described above.

In the present invention, the particle size d50 of the particles in a powdery food after ultrasonication is preferably a predetermined value or less in terms of ingestion. Specifically, the particle size d50 after ultrasonication of a powdery food using the laser diffraction particle size distribution analyzer and using ethanol as a measuring solvent may be 1,000 μm or less. Above all, it is preferably 900 μm or less, preferably 800 μm or less, preferably 700 μm or less, preferably 600 μm or less, preferably 500 μm or less, preferably 400 μm or less, preferably 300 μm or less, preferably 200 μm or less, preferably 150 μm or less, preferably 100 μmor less, and even more preferably 80 μm or less. The lower limit thereof is not particularly limited, and is preferably 0.3 μm or more from the viewpoint of industrial convenience.

The particle size d50 of the particles in a powdery food is defined as the particle size at which the ratio between the proportion of the cumulative value of particle frequency in % on the large side and the proportion of the cumulative value of particle frequency in % on the small side is 50:50 when the particle size distribution of the particles in the powdery food is divided into two from a certain particle size, and is also referred to as 50% integrated diameter. The particle size d50 of the particles in a powdery food can be measured using, for example, the laser diffraction particle size distribution analyzer described below. The term "particle size" herein refers to that measured on a volume basis unless otherwise specified. In the present invention, "the number average particle size (MN)" refers to an average particle size determined from the imaginary distribution of the number of the particles by the calculation assuming that all the particles in the powdery food are spherical and is calculated by $\Sigma(v/d^2)/\Sigma(v/d^3)$ (d: a representative value of each particle size channel, v: percentage on a volume basis for each channel), the numerical value of which largely differs from that of the volume average particle size.

In the powdery food of the present invention, d50, the specific surface area per unit volume, and the like may be measured using a laser diffraction particle size distribution analyzer, the results largely differ between the case of using a hydrophilic measuring solvent (e.g., water) and the case of using a hydrophobic measuring solvent (e.g., ethanol). Specifically, the particles in the powdery food of the present invention preferably have a multimodal particle size distribution when the measurement is performed using water as a measuring solvent. The reason is not clear, but flake-like pieces having shape features of a low degree of circularity and a low degree of unevenness may be expanded by water absorption to form the second mode. Even a powdery food which shows a monomodal particle size distribution when the measurement is performed using ethanol as a measuring solvent is preferable as long as it is a powdery food which shows a multimodal particle size distribution when the measurement is performed using water as a measuring solvent because the effects of the present invention are exerted.

In the particles in the powdery food of the present invention, the maximum particle size in the state before ultrasonication using ethanol as a solvent is preferably adjusted within a predetermined range because the flavor of materials is likely to be sensed. Specifically, the maximum particle size before ultrasonication is preferably 50 μm or more, more preferably 80 μm or more, even more preferably 100 μm or more, above all preferably 150 μm or more, and particularly preferably 200 μm or more. When micronization is performed until the maximum particle size before ultrasonication reaches less than the lower limit, the tissue of the foodstuff is destroyed and unpleasant flavor is likely to be imparted. On the other hand, the upper limit of the maximum particle size before ultrasonication is not limited, but is preferably 2,000 μm or less, more preferably 1,800 μm or less, even more preferably 1,500 μm or less, above all preferably 1,200 μm or less, more preferably 1,100 μm or less, and particularly preferably 1,000 μm or less from the viewpoint of flavor.

The minimum particle size in the state after ultrasonication using ethanol as a solvent is preferably adjusted in a predetermined range, in order to improve the adsorption of the particles in the powdery food of the present invention. Specifically, the minimum particle size after ultrasonication is preferably 0.6 μm or more, more preferably 0.8 μm or more, even more preferably 1.0 μm or more, above all preferably 1.2 μm or more, and particularly preferably 1.4 μm or more. Removal is preferably performed in order to exclude particles having the minimum particle size less than the lower limit after ultrasonication, thereby improving the adsorption at the time of eating. For example, the production is preferably performed by removing the particles below a certain size from an air classified composition. On the other hand, the upper limit of the minimum particle size is not limited, and is preferably 20 μm or less, more preferably 16 μm or less, even more preferably 15 μm or less, above all preferably 12 μm or less, even more preferably 11 μm or less, and particularly preferably 10 μm or less.

The number average particle size (MN2) in the state after ultrasonication using ethanol as a solvent is adjusted in a predetermined range, in order to suppress the adhesion feeling to the oral cavity caused by water absorption in the particles in the powdery food of the present invention. Specifically, the number average particle size (MN2) in the state after ultrasonication may be less than 30 μm, and is above all preferably less than 25 μm, more preferably less than 20 μm, above all preferably less than 15 μm, further more preferably less than 10 μm, even more preferably less than 9 μm, even more preferably less than 8 μm, even more preferably less than 7 μm, and even more preferably less than 6 μm from the viewpoint of texture. On the other hand, the lower limit of the MN2 is not limited, and is preferably 0.3 μm or more, more preferably 0.5 μm or more, even more preferably 0.8 μm or more, above all preferably 1 μm or more, and particularly preferably 2 μm or more.

The specific surface area per unit volume in the state after ultrasonication is preferably adjusted in a predetermined range, in order to suppress the adhesion feeling to the oral cavity caused by water absorption in the powdery food of the present invention. Specifically, the lower limit of the specific surface area per unit volume in the state after ultrasonication using ethanol as a solvent is preferably 0.05 $m^2$/mL or more, more preferably 0.06 $m^2$/mL or more, further more preferably 0.10 $m^2$/mL or more, even more preferably 0.20 $m^2$/mL or more, even more preferably 0.35 $m^2$/mL or more, even more preferably 0.50 $m^2$/mL or more, even more preferably 0.70 $m^2$/mL or more, and particularly preferably 1.00 $m^2$/mL or more. The upper limit thereof is not particularly limited, and is preferably 5.00 $m^2$/mL or less, above all preferably 4.00 $m^2$/mL or less, and more preferably 3.00 $m^2$/mL or less from the viewpoint of industrial convenience.

The measurement conditions for the particle size d50, specific surface area per unit volume, and number average particle size, etc. after ultrasonication of the powdery food of the present invention are not limited, and for example, may be the following conditions. Since the solvent at the time of measurement defines characteristics of the particles in the powdery food of the present invention after the shape change thereof by addition of a liquid, water or ethanol is used in accordance with measurement items, and unless otherwise specified, ethanol is used. The laser diffraction particle size distribution analyzer used in the measurement is not limited, and for example, Microtrac MT3300 EXII system of MicrotracBEL Corporation can be used. The measurement application software is not limited, and for example, DMS2 (Data Management System version 2, MicrotracBEL Corporation) can be used. When the measurement apparatus and the software above are used, the measurement may be performed by pressing down the washing button of the software to implement washing, pressing down the Set Zero button of the software to implement zero adjustment, and directly charging a sample by sample loading until the concentration of the sample falls within an appropriate range. When a sample after ultrasonication is measured, ultrasonication is performed using the above measurement apparatus after charging the sample, followed by measurement. Specifically, a sample not subjected to ultrasonication is charged, the concentration is adjusted within the appropriate range by sample loading, and the ultrasonication button of the software is then pressed down to perform ultrasonication. Subsequently, defoaming is performed three times, and then sample loading is performed again. Immediately after verification that the concentration is still within the appropriate range, laser diffraction is performed at a flow rate of 60% for a measurement time of 10 seconds, and the result can be used as the measured value. In the present invention, "ultrasonication" is a treatment of applying ultrasonic waves having a frequency of 40 kHz to a measurement sample at an output of 40 W for 3 minutes, unless otherwise specified. The parameters at the time of measurement can be, for example, distribution display: volume, particle refractive index: 1.60, solvent refractive index: 1.333 (water solvent), 1.36 (ethanol solvent), upper limit of measurement ($\mu$m) = 2,000.00 $\mu$m, and lower limit of measurement ($\mu$m) = 0.021 $\mu$m.

In the determination of the particle size d50, the specific surface area per unit volume, the number average particle size, and the like of the particles in the powdery food of the present invention, it is preferable to measure the particle size distribution at each channel (CH) and then determine them using the particle size for each measurement channel shown in Table 2 described below as the standard. Specifically, the particle frequency in % of each channel (which is also referred to as "particle frequency in % for XX channel") can be determined by measuring the frequency of particles that are not larger than the particle size defined for each of the channels shown in Table 2 below and larger than the particle size (in the channel largest in the measurement range, measurement lower limit of particle size) defined for the channel of a larger number by one for each channel shown in Table 2 and using the total frequency of all channels within the measurement range as the denominator. For example, the particle frequency in % of channel 1 represents the frequency in % of particles having sizes of 2,000.00 $\mu$m or less and larger than 1,826.00 $\mu$m.

[Table 2]

| Channel | Channel ($\mu$m) | Channel | Channel ($\mu$m) | Channel | Channel ($\mu$m) | Channel | Channel ($\mu$m) |
|---|---|---|---|---|---|---|---|
| 1 | 2000 | 37 | 88 | 73 | 3.889 | 109 | 0.172 |
| 2 | 1826 | 38 | 80.7 | 74 | 3.566 | 110 | 0.158 |
| 3 | 1674 | 39 | 74 | 75 | 3.27 | 111 | 0.145 |
| 4 | 1535 | 40 | 67.86 | 76 | 2.999 | 112 | 0.133 |
| 5 | 1408 | 41 | 62.23 | 77 | 2.75 | 113 | 0.122 |
| 6 | 1291 | 42 | 57.06 | 78 | 2.522 | 114 | 0.111 |
| 7 | 1184 | 43 | 52.33 | 79 | 2.312 | 115 | 0.102 |
| 8 | 1086 | 44 | 47.98 | 80 | 2.121 | 116 | 0.094 |
| 9 | 995.6 | 45 | 44 | 81 | 1.945 | 117 | 0.086 |
| 10 | 913 | 46 | 40.35 | 82 | 1.783 | 118 | 0.079 |

(continued)

| Channel | Channel (μm) | Channel | Channel (μm) | Channel | Channel (μm) | Channel | Channel (μm) |
|---|---|---|---|---|---|---|---|
| 11 | 837.2 | 47 | 37 | 83 | 1.635 | 119 | 0.072 |
| 12 | 767.7 | 48 | 33.93 | 84 | 1.499 | 120 | 0.066 |
| 13 | 704 | 49 | 31.11 | 85 | 1.375 | 121 | 0.061 |
| 14 | 645.6 | 50 | 28.53 | 86 | 1.261 | 122 | 0.056 |
| 15 | 592 | 51 | 26.16 | 87 | 1.156 | 123 | 0.051 |
| 16 | 542.9 | 52 | 23.99 | 88 | 1.06 | 124 | 0.047 |
| 17 | 497.8 | 53 | 22 | 89 | 0.972 | 125 | 0.043 |
| 18 | 456.5 | 54 | 20.17 | 90 | 0.892 | 126 | 0.039 |
| 19 | 418.6 | 55 | 18.5 | 91 | 0.818 | 127 | 0.036 |
| 20 | 383.9 | 56 | 16.96 | 92 | 0.75 | 128 | 0.033 |
| 21 | 352 | 57 | 15.56 | 93 | 0.688 | 129 | 0.03 |
| 22 | 322.8 | 58 | 14.27 | 94 | 0.63 | 130 | 0.028 |
| 23 | 296 | 59 | 13.08 | 95 | 0.578 | 131 | 0.026 |
| 24 | 271.4 | 60 | 12 | 96 | 0.53 | 132 | 0.023 |
| 25 | 248.9 | 61 | 11 | 97 | 0.486 | | |
| 26 | 228.2 | 62 | 10.09 | 98 | 0.446 | | |
| 27 | 209.3 | 63 | 9.25 | 99 | 0.409 | | |
| 28 | 191.9 | 64 | 8.482 | 100 | 0.375 | | |
| 29 | 176 | 65 | 7.778 | 101 | 0.344 | | |
| 30 | 161.4 | 66 | 7.133 | 102 | 0.315 | | |
| 31 | 148 | 67 | 6.541 | 103 | 0.289 | | |
| 32 | 135.7 | 68 | 5.998 | 104 | 0.265 | | |
| 33 | 124.5 | 69 | 5.5 | 105 | 0.243 | | |
| 34 | 114.1 | 70 | 5.044 | 106 | 0.223 | | |
| 35 | 104.7 | 71 | 4.625 | 107 | 0.204 | | |
| 36 | 95.96 | 72 | 4.241 | 108 | 0.187 | | |

The powdery food of the present invention can be manufactured by subjecting a foodstuff having a predetermined amount or more of the dietary fiber content to grinding so that the foodstuff can have a specific particle shape within a certain temperature range. Details are as described above.

The present invention also encompasses a food/drink containing the powdery food of the present invention. That is, in the food/drink containing the powdery food, a pleasant taste in which the adhesion feeling to the oral cavity caused by water absorption inherent in insoluble dietary fibers is suppressed and the smoothness of texture is improved can be imparted to the food/drink to be added due to the effects of the powdery food of the present invention, whereby the taste of the food/drink can be improved. The amount of the powdery food of the present invention blended in the food/drink to be added is not particularly limited and may be appropriately adjusted so that the taste of the powdery food can be imparted to the food/drink, and the proportion of the powdery food with respect to the total amount of the food/drink is preferably 10 mass% or more, more preferably 20 mass% or more, more preferably 30 mass% or more, and particularly preferably 40 mass% or more in terms of dry mass. The upper limit thereof is preferably 100 mass% or less.

The powdery food of the present invention may contain other foodstuffs as long as they do not interfere with the functions and effects of the present invention. Specifically, other foodstuffs refer to foodstuffs or ingredients having a particle size larger than 2,000 μm (2 mm) which are not to be the measurement object of laser diffraction particle size distribution measurement. Examples of such other foodstuffs include, but are not limited to, the puff of grains, dried nuts, and dried fruits, and any of them may be used. These foodstuffs may be used alone or in an arbitrary combination of two or more thereof.

In this case, when measuring the 50% integrated diameter of the particles in a powdery food after ultrasonication, the measurement is performed after eliminating those having 2,000.00 mm or more, which is the upper limit of the measurement, from these foodstuffs and ingredients.

Examples of the food/drink containing the powdery food of the present invention include, but are not limited to, liquid, semi-solid, or solid food/drink such as seasonings (e.g., mayonnaise, dressing, butter, and margarine), semi-solid or solid foods such as confectioneries (e.g., granola, sticks, crackers, caramel, gummies, and chips), and food/drink such as dry seasonings.

In particular, for solid foods such as granola, sticks, and crackers, obtained by agglomerating powdery foods by means including baking, while they especially have the problem to be solved by the present invention including the adhesion feeling to the oral cavity caused by water absorption inherent in insoluble dietary fibers in the powdery food at the time of eating, the powdery food disintegrated in the mouth at the time of eating exerts the effects of the present invention. Thus, they are particularly useful to apply to the food/drink of the present invention.

Examples

The present invention will now be described in more detail with reference to Examples, but these Examples are illustrative only for the convenience of description, and the present invention is not limited to these Examples in any sense.

As shown in Table 3, powdery foods (the particle size d90 in the powdery food after ultrasonication using an ethanol solvent < 200 μm) obtained by subjecting dried products of corn, yellow pea, green soybean, and table beet (each having a moisture less than 20 mass%) to impact crushing were selected as edible plants and processed using a stone type mill (manufactured by GROW ENGINEERING CO., LTD, Multi Mill RD2-15, Grinder NP type), a jet mill (manufactured by HOSOKAWA MICRON CORPORATION, Counter Jet Mill AFG), a disc mill (manufactured by MAKINO MFG. CO., LTD., Disc Mill PM), and a roll mill as the grinder, until particle shape measured values described in Table 3 can be obtained, whereby the powdery foods of Examples were produced. All the gap width at the time of grinding was set to less than 1,000 μm. The micronization conditions were such that the powder of the above edible plants was subjected to grinding at a treatment temperature of 60°C or less for about 30 minutes. The powdery foods obtained from each Example were subjected to analysis and sensory inspection in accordance with the items shown in Table 3.

As Comparative Example, a commercially available green soybean powder (manufactured by AKITA MEIJOU CO., LTD., RANMAN Green soybeans Powder) having a relatively large number average particle size (MN) after ultrasonication was used as a raw material and subjected to grinding (a disc mill) so that the number average particle size (MN) after ultrasonication does not change, thereby producing a powdery food. This was subjected to analysis and sensory inspection in the same manner.

As one example of the food/drink containing a powdery food, sticks were produced using the powdery foods prepared in Test Examples and Comparative Examples in Table 3 by the following production method and subjected to sensory inspection in the same manner as that for the powdery food. After 30 mass% of water was mixed with the powdery food prepared to prepare a dough composition, the dough composition was dried at 80°C for 1 hour and cooled to obtain a stick.

The measurement items in Table 3 were measured in accordance with the suitable conditions.

Subsequently, these powdery foods and foods/drinks were subjected to sensory inspection about the adhesion feeling to the oral cavity caused by water absorption at the time of eating (adhesion feeling), the smoothness of the texture (smoothness), and comprehensive evaluation.

The evaluation criteria are as follows.

<Evaluation criterion No. 1: Adhesion feeling>

    5: Excellent because adhesion feeling is not perceived at all;
    4: Slightly excellent because almost no adhesion feeling is perceived;
    3: Adhesion feeling is moderately perceived, which is acceptable;
    2: Slightly inferior because adhesion feeling is slightly strongly perceived; and
    1: Inferior because adhesion feeling is strongly perceived.

Here, the adhesion feeling was evaluated as a sense as if saliva is drawn up and the powdery food sticks in the oral cavity, which can be perceived at the time of eating of the powdery food.

<Evaluation criterion No. 2: Smoothness>

5: Excellent because smoothness is strongly perceived;
4: Slightly excellent because smoothness is slightly strongly perceived;
3: Smoothness is moderately perceived, which is acceptable;
2: Slightly inferior because smoothness is hardly perceived; and
1: Inferior because smoothness is not perceived.

Here, the smoothness was evaluated as a texture that the powdery food moves in the mouth smoothly without any stagnation.

<Evaluation criterion No. 3: Comprehensive evaluation>

5: Adhesion feeling is not perceived, smoothness is strongly sensed, and good taste is perceived;
4: Almost no adhesion feeling is perceived, smoothness is slightly strongly perceived, and slightly good taste is perceived;
3: Both adhesion feeling and smoothness are moderate and taste is acceptable;
2: Adhesion feeling is slightly strongly perceived, smoothness is hardly perceived, and slightly bad taste is perceived; and
1: Adhesion feeling is strongly perceived, smoothness is not perceived, and bad taste is perceived.

The sensory inspectors were chosen from inspectors trained for the following discrimination tests A) to C) and showed particularly excellent results, had experience in product development and a wealth of knowledge about the quality of foods, such as taste and texture, and were capable of performing absolute evaluation on each sensory inspection item.

A) Taste quality discrimination test of correctly discriminating samples for five tastes (sweetness: taste of sugar, sourness: taste of tartaric acid, savoriness: taste of sodium glutamate, saltiness: taste of sodium chloride, and bitterness: taste of caffeine) from aqueous solutions produced so as to have a concentration close to the threshold of each component and two samples of distilled water, seven samples in total;
B) Concentration difference discrimination test of correctly discriminating concentration differences in five saline solutions and five aqueous acetic acid solutions having concentrations slightly different from each other; and
C) Triangle discrimination test of correctly discriminating a soy sauce of maker B from two soy sauces of maker A and the soy sauce of maker B, three samples in total.

In each of the evaluation items, all the inspectors evaluated standard samples in advance, and each score of the evaluation criteria was standardized. The sensory inspection was then performed with objectivity by 10 inspectors. The evaluation of each item was made by selecting a rating closest to the inspector's own evaluation on a five-grade scale of each item. The total result of the evaluation was calculated from the arithmetic mean values of the scores by 10 inspectors and rounded off after the decimal point.
The results are shown in Table 3 and Table 4.

[Table 3]

| | Raw material | | Primary treatment of raw material | | | | | | | | | | Treatment method/characteristics | | | Secondary treatment of raw material (grinding) | |
|---|---|---|---|---|---|---|---|---|---|---|---|---|---|---|---|---|---|
| | | | First site of use (edible part) | | | | Second site of use (insoluble dietary fiber localized site) | | | | | | | | | | |
| | Foodstuff containing insoluble dietary fibers | Amount of available carbohydrate | Site of use 1 | Shape | Insoluble dietary fiber content (in terms of dry mass) | Blending proportion (in terms of dry mass) | Site of use 2 | Shape | Insoluble dietary fiber content (in terms of dry mass) | Insoluble dietary fiber content (site of use 2/edible part) | Blending proportion (in terms of dry mass) | Content of foodstuff containing insoluble dietary fibers with respect to powdery food | Crushing method | Number average particle size after ultrasonication (ethanol solvent) [MN1] | Specific surface area per unit volume when ultrasonication is performed [cs1] | Treatment method | Treatment temperature |
| | | (g/100g) | | | (g/100g) | (g/100g) | | | (g/100g) | Times | (g/100g) | Mass% | | μm | m²/mL | | °C |
| Comparative Example 1 | Dried corn | 39 | Seeds(edible part) | Chips | 10 | 40 | Core (inedible part) | Chips | 55 | 5.5 | 60 | 100 | Impact type (hammer mill) | 8.0 | 0.17 | No treatment | - |
| Test Example 1 | Dried corn | 49 | Seeds(edible part) | Chips | 10 | 60 | Core (inedible part) | Chips | 55 | 5.5 | 40 | 100 | Impact type (hammer mill) | 8.0 | 0.17 | Stone type | Less than 30°C |
| Test Example 2 | Dried corn | 44 | Seeds(edible part) | Chips | 10 | 50 | Core (inedible part) | Chips | 55 | 5.5 | 50 | 100 | Impact type (hammer mill) | 8.0 | 0.17 | Stone type | Less than 50°C |
| Test Example 3 | Dried corn | 44 | Seeds(edible part) | Chips | 10 | 50 | Core (inedible part) | Chips | 55 | 5.5 | 50 | 100 | Impact type (hammer mill) | 31.0 | 0.03 | Roll type | Less than 50°C |
| Test Example 4 | Dried corn | 44 | Seeds(edible part) | Chips | 10 | 50 | Core (inedible part) | Chips | 55 | 5.5 | 50 | 100 | Impact type (hammer mill) | 8.0 | 0.17 | Disc type | Less than 50°C |
| Test Example 5 | Dried corn | 44 | Seeds(edible part) | Chips | 10 | 50 | Core (inedible part) | Chips | 55 | 5.5 | 50 | 100 | Impact type (hammer mill) | 21.9 | 0.17 | Disc type | Less than 50°C |
| Comparative Example 2 | Dried yellow pea | 39 | Cotyledon (edible part) | Chips | 7.5 | 100 | - | - | - | - | 0 | 100 | Impact type (hammer mill) | 5.6 | 0.46 | No treatment | - |
| Test Example 6 | Dried yellow pea | 37 | Cotyledon (edible part) | Chips | 7.5 | 95 | Seed coat | Chips | 20 | 2.7 | 5 | 100 | Impact type (hammer mill) | 5.6 | 0.46 | Roll type | Less than 30°C |
| Comparative Example 3 | Dried yellow pea | 35 | Cotyledon (edible part) | Chips | 7.5 | 85 | Seed coat | Chips | 20 | 2.7 | 15 | 100 | Impact type (pin mill) | 5.6 | 0.46 | Jet type (jet mill) | 60°C or more |
| Test Example 7 | Dried yellow pea | 33 | Cotyledon (edible part) | Chips | 7.5 | 80 | Seed coat | Chips | 20 | 2.7 | 20 | 100 | Impact type (pin mill) | 1.9 | 0.47 | Disc mill | Less than 60°C |
| Test Example 8 | Dried green soybean | 28 | Seeds(edible part) | Chips | 19 | 35 | Pod (inedible part) | Chips | 61 | 3.2 | 65 | 100 | Cutting type (cutter mixer) | 4.0 | 0.29 | No treatment | - |
| Test Example 9 | Dried green soybean | 28 | Seeds(edible part) | Chips | 19 | 35 | Pod (inedible part) | Chips | 61 | 3.2 | 65 | 100 | Cutting type (cutter mixer) | 4.0 | 0.29 | Roll type | Less than 30°C |
| Comparative Example 4 (commercially available dry green soybean powder) | Dried green soybean | Unclear due to commercial product | Seeds(edible part) | Unclear due to commercial product | | | Pod (inedible part) | Unclear due to commercial product | | | | 100 | Slicer | 33.5 | 0.04 | Disc type | Less than 50°C |
| Comparative Example 5 | Dried table beet | 70 | Taproot (edible part) | Chips | 23.1 | 100 | - | - | - | - | 0 | 100 | Impact type (pin mill) | 5.6 | 0.46 | Disc type | Less than 50°C |

| Total fat/oil content (g/100g) | Insoluble dietary fiber content (in terms of dry mass) (g/100g) | Proportion derived from insoluble dietary fiber localized site in insoluble dietary fiber (Mass%) | Maximum particle size when no ultrasonication is performed (ethanol solvent) (μm) | Number average particle size when ultrasonication is performed (ethanol solvent) [MN2] (μm) | Minimum particle size when ultrasonication is performed (ethanol solvent) (μm) | MN2/MN1 | Specific surface area per unit volume when ultrasonication is performed (ethanol solvent) [cs2] (m²/mL) | cs2/cs1 | Peak number | Peak shape | Number of particles having degree of unevenness of 0.6 or less and degree of circularity of 0.2 or less (cs1) | Number of particles having degree of unevenness of 0.6 or more and degree of circularity of 0.2 or less (β) | N (α/β) | Increment difference of N before and after grinding | Regression coefficient a | Intercept b | Increment difference of regression coefficient a before and after grinding | Adhesion | Smoothness | Comprehensive evaluation |
|---|---|---|---|---|---|---|---|---|---|---|---|---|---|---|---|---|---|---|---|---|
| 8.0 | 37.0 | 89.2 | 995.6 | 8.0 | 3.6 | 1.0 | 0.17 | 1.0 | 1 | Monomodal | 24 | 72 | 0.33 | - | 0.29 | 0.74 | - | 1 | 3 | 2 |
| 7.0 | 28.0 | 78.6 | 352.0 | 4.3 | 2.5 | 0.5 | 0.34 | 2.0 | 2 | Multimodal | 93 | 58 | 1.60 | 1.20 | 0.41 | 0.64 | 0.20 | 5 | 5 | 5 |
| 7.0 | 32.5 | 84.6 | 352.0 | 4.1 | 3.6 | 0.5 | 0.36 | 2.1 | 2 | Multimodal | 124 | 134 | 0.93 | 0.45 | 0.42 | 0.64 | 0.15 | 5 | 5 | 5 |
| 7.0 | 32.5 | 84.6 | 592.0 | 18.4 | 3.6 | 0.6 | 0.08 | 2.7 | 2 | Multimodal | 60 | 112 | 0.54 | 0.06 | 0.42 | 0.64 | 0.15 | 4 | 4 | 4 |
| 7.0 | 32.5 | 84.6 | 296.0 | 4.3 | 2.1 | 0.5 | 0.34 | 2.0 | 2 | Multimodal | 152 | 99 | 1.54 | 1.06 | 0.61 | 0.40 | 0.21 | 5 | 5 | 5 |
| 7.0 | 32.5 | 84.6 | 837.2 | 10.6 | 5.0 | 0.5 | 0.17 | 1.0 | 2 | Multimodal | 68 | 123 | 0.55 | 0.07 | 0.52 | 0.50 | 0.17 | 4 | 4 | 4 |
| 3.2 | 7.5 | 0 | 209.3 | 5.6 | 0.5 | 1.0 | 0.46 | 1.0 | 1 | Monomodal | 65 | 71 | 0.92 | - | 0.35 | 0.69 | - | 1 | 2 | 2 |
| 3.2 | 8.1 | 12.3 | 995.6 | 2.3 | 1.3 | 0.4 | 0.21 | 0.5 | 2 | Multimodal | 673 | 411 | 1.64 | 1.12 | 0.52 | 0.56 | 0.30 | 5 | 5 | 5 |
| 2.7 | 9.4 | 32.0 | 592.0 | 1.9 | 1.1 | 0.3 | 0.68 | 1.5 | 1 | Monomodal | 40 | 102 | 0.39 | -0.10 | 0.34 | 0.69 | -0.09 | 1 | 1 | 1 |
| 2.7 | 10.0 | 40.0 | 352.0 | 4.1 | 2.1 | 2.2 | 0.36 | 0.8 | 2 | Multimodal | 230 | 275 | 0.84 | 0.23 | 0.47 | 0.61 | 0.12 | 4 | 4 | 5 |
| 11.0 | 46.3 | 85.6 | 592 | 4.0 | 1.5 | 1.0 | 0.29 | 1.0 | 1 | Monomodal | 82 | 85 | 0.96 | 0.03 | 0.35 | 0.69 | 0.00 | 4 | 4 | 3 |
| 11.0 | 46.3 | 85.6 | 592 | 3.6 | 1.8 | 0.9 | 0.40 | 1.4 | 2 | Multimodal | 264 | 177 | 1.49 | 0.56 | 0.41 | 0.63 | 0.05 | 5 | 5 | 5 |
| 16.0 | 34.8 | Unclear due to commercial product | 1408.0 | 33.5 | 17.0 | 1.0 | 0.04 | 1.0 | 2 | Multimodal | 832 | 894 | 0.93 | 0.20 | 0.49 | 0.59 | 0.03 | 1 | 1 | 1 |

No powdery food is obtained due to paste like physical properties

[Table 3(2)]

| | Raw material | | Primary treatment of raw material | | | | | | | | | | | | | Secondary treatment of raw material (grinding) | |
| | | | First site of use (edible part) | | | | Second site of use (insoluble dietary fiber localized site) | | | | | Treatment method/characteristics | | | | | |
| | Foodstuff containing insoluble dietary fibers | Amount of available carbohydrate | Site of use 1 | Shape | Insoluble dietary fiber content (in terms of dry mass) | Blending proportion (in terms of dry mass) | Site of use 2 | Shape | Insoluble dietary fiber content (in terms of dry mass) | Insoluble dietary fiber content (site of use 2/edible part) | Blending proportion (in terms of dry mass) | Content of foodstuff containing insoluble dietary fibers with respect to powdery food | Crushing method | Number average particle size after ultrasonication (ethanol solvent) [MN1] | Specific surface area per unit volume when ultrasonication is performed [cs1] | Treatment method | Treatment temperature |
| | | (g/100g) | | | (g/100g) | (g/100g) | | | (g/100g) | Times | (g/100g) | Mass% | | μm | m²/mL | | °C |
| Comparative Example 1 | Dried com | 39 | Seeds (edible part) | Chips | 10 | 40 | Core (inedible part) | Chips | 55 | 5.5 | 60 | 100 | Impact type (hammer mill) | 8.0 | 0.17 | No treatment | - |
| Test Example 1 | Dried com | 49 | Seeds (edible part) | Chips | 10 | 60 | Core (inedible part) | Chips | 55 | 5.5 | 40 | 100 | Impact type (hammer mill) | 8.0 | 0.17 | Stone type | Less than 30°C |
| Test Example 2 | Dried com | 44 | Seeds (edible part) | Chips | 10 | 50 | Core (inedible part) | Chips | 55 | 5.5 | 50 | 100 | Impact type (hammer mill) | 8.0 | 0.17 | Stone type | Less than 50°C |

| | Raw material | | Primary treatment of raw material | | | | | | | | | | | | | Secondary treatment of raw material (grinding) | |
| | | | First site of use (edible part) | | | | Second site of use (insoluble dietary fiber localized site) | | | | | Treatment method/characteristics | | | | |
| | Foodstuff containing insoluble dietary fibers | Amount of available carbohydrate | Site of use 1 | Shape | Insoluble dietary fiber content (in terms of dry mass) | Blending proportion (in terms of dry mass) | Site of use 2 | Shape | Insoluble dietary fiber content (in terms of dry mass) | Insoluble dietary fiber content (site of use 2/edible part) | Blending proportion (in terms of dry mass) | Content of foodstuff containing insoluble dietary fibers with respect to powdery food | Crushing method | Number average particle size after ultrasonication (ethanol solvent) [MN1] | Specific surface area per unit volume when ultrasonication is performed [cs1] | Treatment method | Treatment temperature |
| | | (g/100g) | | | (g/100g) | (g/100g) | | | (g/100g) | Times | (g/100g) | Mass% | | $\mu$m | m$^2$/mL | | °C |
| Test Example 3 | Dried com | 44 | Seeds (edible part) | Chips | 10 | 50 | Core (inedible part) | Chips | 55 | 5.5 | 50 | 100 | Impact type (hammer mill) | 31.0 | 0.03 | Roll type | Less than 50°C |
| Test Example 4 | Dried com | 44 | Seeds (edible part) | Chips | 10 | 50 | Core (inedible part) | Chips | 55 | 5.5 | 50 | 100 | Impact type (hammer mill) | 8.0 | 0.17 | Disc type | Less than 50°C |
| Test Example 5 | Dried com | 44 | Seeds (edible part) | Chips | 10 | 50 | Core (inedible part) | Chips | 55 | 5.5 | 50 | 100 | Impact type (hammer mill) | 21.9 | 0.17 | Disc type | Less than 50°C |

EP 3 915 396 A1

(continued)

| | Raw material | | Primary treatment of raw material | | | | | | | | | | | | | Secondary treatment of raw material (grinding) | |
| | | | First site of use (edible part) | | | | Second site of use (insoluble dietary fiber localized site) | | | | | Treatment method/characteristics | | | | | |
| | Foodstuff containing insoluble dietary fibers | Amount of available carbohydrate | Site of use 1 | Shape | Insoluble dietary fiber content (in terms of dry mass) | Blending proportion (in terms of dry mass) | Site of use 2 | Shape | Insoluble dietary fiber content (in terms of dry mass) | Insoluble dietary fiber content (site of use 2/edible part) | Blending proportion (in terms of dry mass) | Content of foodstuff containing insoluble dietary fibers with respect to powdery food | Crushing method | Number average particle size after ultrasonication (ethanol solvent) [MN1] | Specific surface area per unit volume when ultrasonication is performed [cs1] | Treatment method | Treatment temperature |
| | | (g/100g) | | | (g/100g) | (g/100g) | | | (g/100g) | Times | (g/100g) | Mass% | | $\mu$m | m$^2$/mL | | °C |
| Comparative Example 2 | Dried yellow pea | 39 | Cotyledon (edible part) | Chips | 7.5 | 100 | - | - | - | - | 0 | 100 | Impact type (hammer mill) | 5.6 | 0.46 | No treatment | - |
| Test Example 6 | Dried yellow pea | 37 | Cotyledon (edible part) | Chips | 7.5 | 95 | Seed coat | Chips | 20 | 2.7 | 5 | 100 | Impact type (hammer mill) | 5.6 | 0.46 | Roll type | Less than 30°C |
| Comparative Example 3 | Dried yellow pea | 35 | Cotyledon (edible part) | Chips | 7.5 | 85 | Seed coat | Chips | 20 | 2.7 | 15 | 100 | Impact type (pin mill) | 5.6 | 0.46 | Jet type (jet mill) | 60°C or more |

(continued)

| | Raw material | | Primary treatment of raw material | | | | | | | | | | | | | | Secondary treatment of raw material (grinding) | |
| | | | First site of use (edible part) | | | | Second site of use (insoluble dietary fiber localized site) | | | | | | Treatment method/characteristics | | | | |
| | Foodstuff containing insoluble dietary fibers | Amount of available carbohydrate | Site of use 1 | Shape | Insoluble dietary fiber content (in terms of dry mass) | Blending proportion (in terms of dry mass) | Site of use 2 | Shape | Insoluble dietary fiber content (in terms of dry mass) | Insoluble dietary fiber content (site of use 2/edible part) | Blending proportion (in terms of dry mass) | Content of foodstuff containing insoluble dietary fibers with respect to powdery food | Crushing method | Number average particle size after ultrasonication (ethanol solvent) [MN1] | Specific surface area per unit volume when ultrasonication is performed [cs1] | Treatment method | Treatment temperature |
| | | (g/100g) | | | (g/100g) | (g/100g) | | | (g/100g) | Times | (g/100g) | Mass% | | μm | m²/mL | | °C |
| Test Example 7 | Dried yellow pea | 33 | Cotyledon (edible part) | Chips | 7.5 | 80 | Seed coat | Chips | 20 | 2.7 | 20 | 100 | Impact type (pin mill) | 1.9 | 0.47 | Disc mill | Less than 60°C |
| Test Example 8 | Dried green soybean | 28 | Seeds (edible part) | Chips | 19 | 35 | Pod (inedible part) | Chips | 61 | 3.2 | 65 | 100 | Cutting type (cutter mixer) | 4.0 | 0.29 | No treatment | - |
| Test Example 9 | Dried green soybean | 28 | Seeds (edible part) | Chips | 19 | 35 | Pod (inedible part) | Chips | 61 | 3.2 | 65 | 100 | Cutting type (cutter mixer) | 4.0 | 0.29 | Roll type | Less than 30°C |

| | Raw material | | Primary treatment of raw material | | | | | | | | | | | | Secondary treatment of raw material (grinding) | |
| | | | First site of use (edible part) | | | | Second site of use (insoluble dietary fiber localized site) | | | | Treatment method/characteristics | | | | | |
| | Foodstuff containing insoluble dietary fibers | Amount of available carbohydrate | Site of use 1 | Shape | Insoluble dietary fiber content (in terms of dry mass) | Blending proportion (in terms of dry mass) | Site of use 2 | Shape | Insoluble dietary fiber content (in terms of dry mass) | Insoluble dietary fiber content (site of use 2/edible part) | Blending proportion (in terms of dry mass) | Content of foodstuff containing insoluble dietary fibers with respect to powdery food | Crushing method | Number average particle size after ultrasonication (ethanol solvent) [MN1] | Specific surface area per unit volume when ultrasonication is performed [cs1] | Treatment method | Treatment temperature |
| | | (g/100g) | | | (g/100g) | (g/100g) | | | (g/100g) | Times | (g/100g) | Mass% | | $\mu m$ | $m^2$/mL | | °C |
| Comparative Example 4 (commercially available dry green soybean powder) | Dried green soybean | Unclear due to commercial product | Seeds (edible part) | Unclear due to commercial product | | | Pod (inedible part) | Unclear due to commercial product | | | | 100 | Slicer | 33.5 | 0.04 | Disc type | Less than 50°C |
| Comparative Example 5 | Dried table beet | 70 | Taproot (edible part) | Chips | 23.1 | 100 | - | - | - | - | 0 | 100 | Impact type (pin mill) | 5.6 | 0.46 | Disc type | Less than 50°C |

24

[Table 4]

| | Total fat/oil content | Insoluble dietary fiber content (in terms of dry mass) | Proportion derived from insoluble dietary fiber localized site in insoluble dietary fiber | Maximum particle size when no ultrasonication is performed (ethanol solvent) | Number average particle size when ultrasonication is performed (ethanol solvent) [MN2] | Minimum particle size when ultrasonication is performed (ethanol solvent) | MN2/MN1 | Specific surface area per unit volume when ultrasonication is performed (ethanol solvent) [cs2] | cs2/cs1 | Characteristics of shape of particle size distribution before ultrasonication (water solvent) | | Number of particles having degree of unevenness of 0.6 or less and degree of circularity of 0.2 or less (α) | Number of particles having degree of unevenness of 0.6 or more and degree of circularity of 02 or less (β) | N (α/β) | Increment difference of N before and after grinding | Regression line y = ax + b Variate x: degree of circularity Variate y: degree of unevenness | | Increment difference of regression coefficient a before and after grinding | Sensory inspection | | |
|---|---|---|---|---|---|---|---|---|---|---|---|---|---|---|---|---|---|---|---|---|---|
| | (g/100g) | (g/100g) | Mass% | μm | μm | μm | | m²/mL | | Peak number | Peak shape | Number of particles | Number of particles | | | Regression coefficient a | Intercept b | | feeling adhesion | Smoothness | Comprehensive evaluation |
| Comparative Example 1 | 8.0 | 37.0 | 89.2 | 995.6 | 8.0 | 3.6 | 1.0 | 0.17 | 1.0 | 1 | Monomodal | 24 | 72 | 0.33 | - | 0.29 | 0.74 | - | 1 | 3 | 2 |
| Test Example 1 | 7.0 | 28.0 | 78.6 | 352.0 | 4.3 | 2.5 | 0.5 | 0.34 | 2.0 | 2 | Multimodal | 93 | 58 | 1.60 | 1.20 | 0.41 | 0.64 | 0.20 | 5 | 5 | 5 |
| Test Example 2 | 7.0 | 32.5 | 84.6 | 352.0 | 4.1 | 3.6 | 0.5 | 0.36 | 2.1 | 2 | Multimodal | 124 | 134 | 0.93 | 0.45 | 0.42 | 0.64 | 0.15 | 5 | 5 | 5 |
| Test Example 3 | 7.0 | 32.5 | 84.6 | 592.0 | 18.4 | 3.6 | 0.6 | 0.08 | 2.7 | 2 | Multimodal | 60 | 112 | 0.54 | 0.06 | 0.42 | 0.64 | 0.15 | 4 | 4 | 4 |
| Test Example 4 | 7.0 | 32.5 | 84.6 | 296.0 | 4.3 | 2.1 | 0.5 | 0.34 | 2.0 | 2 | Multimodal | 152 | 99 | 1.54 | 1.06 | 0.61 | 0.40 | 0.21 | 5 | 5 | 5 |

| | Composition measured value | | | | | | | | | | | | | | | | | Sensory inspection | | |
|---|---|---|---|---|---|---|---|---|---|---|---|---|---|---|---|---|---|---|---|---|---|
| | Total fat/oil content | Insoluble dietary fiber content (in terms of dry mass) | Proportion derived from insoluble dietary fiber localized site in insoluble dietary fiber | Maximum particle size when no ultrasonication is performed (ethanol solvent) | Number average particle size when ultrasonication is performed (ethanol solvent) [MN2] | Minimum particle size when ultrasonication is performed (ethanol solvent) | MN2/MN1 | Specific surface area per unit volume when ultrasonication is performed (ethanol solvent) [cs2] | cs2/cs1 | Characteristics of shape of particle size distribution before ultrasonication (water solvent) | | Number of particles having degree of unevenness of 0.6 or less and degree of circularity of 0.2 or less (α) | Number of particles having degree of unevenness of 0.6 or more and degree of circularity of 02 or less (β) | N (α/β) | Increment difference of N before and after grinding | Regression line y = ax + b Variate x: degree of circularity Variate y: degree of unevenness | | Increment difference of regression coefficient a before and after grinding | | | |
| | (g/100g) | (g/100g) | Mass% | μm | μm | μm | | m²/mL | | Peak number | Peak shape | Number of particles | Number of particles | | | Regression coefficient a | Intercept b | | feeling adhesion | Smoothness | Comprehensive evaluation |
| Test Example 5 | 7.0 | 32.5 | 84.6 | 837.2 | 10.6 | 5.0 | 0.5 | 0.17 | 1.0 | 2 | Multimodal | 68 | 123 | 0.55 | 0.07 | 0.52 | 0.50 | 0.17 | 4 | 4 | 4 |
| Comparative Example 2 | 3.2 | 7.5 | 0 | 209.3 | 5.6 | 0.5 | 1.0 | 0.46 | 1.0 | 1 | Monomodal | 65 | 71 | 0.92 | - | 0.35 | 0.69 | - | 1 | 2 | 2 |
| Test Example 6 | 3.2 | 8.1 | 12.3 | 995.6 | 2.3 | 1.3 | 0.4 | 0.21 | 0.5 | 2 | Multimodal | 673 | 411 | 1.64 | 1.12 | 0.52 | 0.56 | 0.30 | 5 | 5 | 5 |
| Comparative Example 3 | 2.7 | 9.4 | 32.0 | 592.0 | 1.9 | 1.1 | 0.3 | 0.68 | 1.5 | 1 | Monomodal | 40 | 102 | 0.39 | -0.10 | 0.34 | 0.69 | -0.09 | 1 | 1 | 1 |
| Test Example 7 | 2.7 | 10.0 | 40.0 | 352.0 | 4.1 | 2.1 | 2.2 | 0.36 | 0.8 | 2 | Multimodal | 230 | 275 | 0.84 | 0.23 | 0.47 | 0.61 | 0.12 | 4 | 4 | 5 |

EP 3 915 396 A1

26

| | Composition measured value | | | | | | | | | | | | | | | | | Sensory inspection | | |
|---|---|---|---|---|---|---|---|---|---|---|---|---|---|---|---|---|---|---|---|---|
| | Total fat/oil content | Insoluble dietary fiber content (in terms of dry mass) | Proportion derived from insoluble dietary fiber localized site in insoluble dietary fiber | Maximum particle size when no ultrasonication is performed (ethanol solvent) | Number average particle size when ultrasonication is performed (ethanol solvent) [MN2] | Minimum particle size when ultrasonication is performed (ethanol solvent) | MN2/MN1 | Specific surface area per unit volume when ultrasonication is performed (ethanol solvent) [cs2] | cs2/cs1 | Characteristics of shape of particle size distribution before ultrasonication (water solvent) | | Number of particles having degree of unevenness of 0.6 or less and degree of circularity of 0.2 or less ($\alpha$) | Number of particles having degree of unevenness of 0.6 or more and degree of circularity of 02 or less ($\beta$) | N ($\alpha$/$\beta$) | Increment difference of N before and after grinding | Regression line y = ax + b Variate x: degree of circularity Variate y: degree of unevenness | | Increment difference of regression coefficient a before and after grinding | | | |
| | (g/100g) | (g/100g) | Mass% | $\mu$m | $\mu$m | $\mu$m | | m$^2$/mL | | Peak number | Peak shape | Number of particles | Number of particles | | | Regression coefficient a | Intercept b | | feeling adhesion | Smoothness | Comprehensive evaluation |
| Test Example 8 | 11.0 | 46.3 | 85.6 | 592 | 4.0 | 1.5 | 1.0 | 0.29 | 1.0 | 1 | Monomodal | 82 | 85 | 0.96 | 0.03 | 0.35 | 0.69 | 0.00 | 4 | 4 | 3 |
| Test Example 9 | 11.0 | 46.3 | 85.6 | 592 | 3.6 | 1.8 | 0.9 | 0.40 | 1.4 | 2 | Multimodal | 264 | 177 | 1.49 | 0.56 | 0.41 | 0.63 | 0.05 | 5 | 5 | 5 |

(continued)

| | To-tal fat/oil content | Insoluble dietary fiber content (in terms of dry mass) | Proportion derived from insoluble dietary fiber localized site in insoluble dietary fiber | Maximum particle size when no ultrasonication is performed (ethanol solvent) | Number average particle size when ultrasonication is performed (ethanol solvent) [MN2] | Minimum particle size when ultrasonication is performed (ethanol solvent) | MN2/MN1 | Specific surface area per unit volume when ultrasonication is performed (ethanol solvent) [cs2] | cs2/cs1 | Characteristics of shape of particle size distribution before ultrasonication (water solvent) | | Number of particles having degree of unevenness of 0.6 or less and degree of circularity of 0.2 or less (α) | Number of particles having degree of unevenness of 0.6 or more and degree of circularity of 02 or less (β) | N (α/β) | Increment difference of N before and after grinding | Regression line y = ax + b Variate x: degree of circularity Variate y: degree of unevenness | | Increment difference of regression coefficient a before and after grinding | Sensory inspection | | |
|---|---|---|---|---|---|---|---|---|---|---|---|---|---|---|---|---|---|---|---|---|---|
| | (g/100g) | (g/100g) | Mass% | μm | μm | μm | | m²/mL | | Peak number | Peak shape | Number of particles | Number of particles | | | Regression coefficient a | Intercept b | | feeling adhesion | Smoothness | Comprehensive evaluation |
| Comparative Example 4 (commercially available dry green soybean powder) | 16.0 | 34.8 | Unclear due to commercial product | 1408.0 | 33.5 | 17.0 | 1.0 | 0.04 | 1.0 | 2 | Multimodal | 832 | 894 | 0.93 | 0.20 | 0.49 | 0.59 | 0.03 | 1 | 1 | 1 |

(continued)

| | To-tal fat/oil con-tent | Insol-uble die-tary fiber con-tent (in terms of dry mass) | Pro-portion de-rived from in-soluble dietary fiber lo-calized site in insolu-ble die-tary fib-er | Maxi-mum particle size when no ultrason-ication is per-formed (ethanol solvent) | Number average particle size when ul-trasoni-cation is per-formed (ethanol solvent) [MN2] | Mini-mum particle size when ul-trasoni-cation is per-formed (ethanol solvent) | MN2/MN1 | Specific surface area per unit vol-ume when ul-trasoni-cation is per-formed (ethanol solvent) [cs2] | cs2/cs1 | Characteristics of shape of particle size distribu-tion before ul-trasonication (water sol-vent) | | Number of par-ticles having degree of une-ven-ness of 0.6 or less and de-gree of circu-larity of 0.2 or less (α) | Number of par-ticles having degree of une-ven-ness of 0.6 or more and de-gree of circu-larity of 02 or less (β) | N (α/β) | Incre-ment differ-ence of N be-fore and after grind-ing | Regression line y = ax + b Variate x: de-gree of circu-larity Variate y: degree of unevenness | | Incre-ment differ-ence of re-gres-sion coeffi-cient a before and af-ter grind-ing | Sensory inspection | | |
|---|---|---|---|---|---|---|---|---|---|---|---|---|---|---|---|---|---|---|---|---|---|
| | (g/100g) | (g/100g) | Mass% | μm | μm | μm | | m²/mL | | Peak num-ber | Peak shape | Number of par-ticles | Number of par-ticles | | | Re-gres-sion coeffi-cient a | Inter-cept b | | feel-ing adhe-sion | Smooth ness | Compre-hensive evalua-tion |
| Compar-ative Ex-ample 5 | No powdery food is obtained due to paste like physical properties | | | | | | | | | | | | | | | | | | | | |

As a result, it was revealed that in the powdery food containing insoluble dietary fibers, the effects of the present invention that the adhesion feeling to the oral cavity caused by water absorption inherent in insoluble dietary fibers is suppressed at the time of eating and the smoothness of texture is improved are exerted by adjusting fine particles and/or fine particle composites with a specific shape constituting the powdery food to a certain proportion. Further, it was found to be more preferable that grinding be performed so that the degree of micronization of the object to be ground resulting from grinding (the foodstuff containing insoluble dietary fibers containing an insoluble dietary fiber localized site) can be a certain degree or less, because a powdery food having less flavor deterioration accompanying with the treatment is obtained.

Although not shown in Tables, it was also confirmed that similar results as the powdery food were obtained for the sticks produced as one example of the food/drink containing a powdery food.

[Industrial Applicability]

The powdery food of the present invention and the food/drink containing the powdery food can be conveniently and widely used in the field of foods and have a significantly high utility.

**Claims**

1. A powdery food comprising a foodstuff containing insoluble dietary fibers comprising an insoluble dietary fiber localized site, the powdery food satisfying (1) and (2) and satisfying at least one of (3-1) or (3-2):

   (1) an insoluble dietary fiber content is 5 mass% or more in terms of dry mass;
   (2) a number average particle size (MN2) of particles in the powdery food after ultrasonication using a laser diffraction particle size distribution analyzer and using ethanol as a measuring solvent is less than 30 $\mu$m;
   (3-1) N determined by 'N = $\alpha/\beta$' is 0.40 or more;
   $\alpha$: number of particles having a degree of unevenness of 0.6 or less and a degree of circularity of 0.2 or less measured by method A;
   $\beta$: number of particles having a degree of unevenness of 0.6 or more and a degree of circularity of 0.2 or less measured by method A;
   method A: 10,000 particles of fine particles and/or fine particle composites in the powdery food in a state before ultrasonication are analyzed using a particle shape image analyzer in an isopropyl alcohol solvent; and
   (3-2) a regression coefficient a of a regression line y = ax + b determined by a least squares method is more than 0.35, provided that the degree of circularity in a planar particle image measured by the method A is one variate x and the degree of unevenness is the other variate y.

2. The powdery food according to claim 1, satisfying both (3-1) and (3-2).

3. The powdery food according to claim 1 or 2, wherein a specific surface area per unit volume of the powdery food is 0.05 m$^2$/mL or more after ultrasonication using a laser diffraction particle size distribution analyzer and using ethanol as a measuring solvent.

4. The powdery food according to any one of claims 1 to 3, wherein the particles in the powdery food before ultrasonication have a maximum particle size of 50 $\mu$m or more using a laser diffraction particle size distribution analyzer and using ethanol as a measuring solvent.

5. The powdery food according to any one of claims 1 to 4, wherein a proportion derived from the insoluble dietary fiber localized site in the insoluble dietary fibers is 5 mass% or more in terms of dry mass.

6. The powdery food according to any one of claims 1 to 5, wherein the insoluble dietary fibers comprise the insoluble dietary fibers derived from an edible part and/or an inedible part of the foodstuff containing insoluble dietary fibers.

7. The powdery food according to any one of claims 1 to 6, wherein the insoluble dietary fibers comprise insoluble plant fibers derived from the edible part and the inedible part of the same type of foodstuff containing insoluble dietary fibers.

8. The powdery food according to any one of claims 1 to 7, wherein the foodstuff containing insoluble dietary fibers is one or more selected from the group consisting of grains, potatoes, pulses, nuts, vegetables, fruits, mushrooms, and algae.

9. The powdery food according to any one of claims 1 to 8, wherein the foodstuff containing insoluble dietary fibers is one or more selected from the group consisting of soybean, corn, carrot, pumpkin, pea, broccoli, and cabbage.

10. The powdery food according to any one of claims 1 to 9, wherein the powdery food has an amount of available carbohydrate less than 65 mass% in terms of dry mass.

11. The powdery food according to any one of claims 1 to 10, wherein the powdery food has a total fat/oil content less than 30 mass% in terms of dry mass.

12. The powdery food according to any one of claims 1 to 11, wherein the powdery food comprises 15 mass% or more of the foodstuff containing insoluble dietary fibers including a micronized insoluble dietary fiber localized site.

13. The powdery food according to any one of claims 1 to 12, wherein a total content of the foodstuff containing insoluble dietary fibers comprising the insoluble dietary fiber localized site is 30 mass% or more with respect to a total insoluble component.

14. The powdery food according to any one of claims 1 to 13, wherein a particle size distribution of the particles in the powdery food before ultrasonication upon measurement using a laser diffraction particle size distribution analyzer and using water as a measuring solvent shows a multimodal particle size distribution.

15. A food/drink comprising the powdery food according to any one of claims 1 to 14.

16. A method for producing the powdery food according to any one of claims 1 to 14, comprising subjecting a foodstuff containing insoluble dietary fibers comprising an insoluble dietary fiber localized site having a moisture content of 20 mass% or less and a dietary fiber content of 5 mass% or more in terms of dry mass to grinding at a temperature more than 0°C and less than 60°C, until (2), (3-1), and (3-2) of claim 1 are satisfied.

17. The method for producing the powdery food according to claim 16, wherein the grinding of the foodstuff containing insoluble dietary fibers is performed until at least one of (3-1') or (3-2') is satisfied:

(3-1') N increases 0.01 or more before and after grinding; and
(3-2') the regression coefficient a increases 0.01 or more before and after grinding.

18. The method for producing the powdery food according to claim 16 or 17, wherein the foodstuff containing insoluble dietary fibers comprising an insoluble dietary fiber localized site is a dry powder foodstuff.

19. The method for producing the powdery food according to any one of claims 16 to 18, wherein a proportion of a value after grinding (MN2) to a value before grinding (MN1), (MN2/MN1), is 0.1 times or more, in the number average particle size (MN).

20. The method for producing the powdery food according to any one of claims 16 to 19, wherein a specific surface area per unit volume of the foodstuff containing insoluble dietary fibers before grinding (cs1) is 0.1 or more after ultrasonication using a laser diffraction particle size distribution analyzer and using ethanol as a measuring solvent.

21. The method for producing the powdery food according to any one of claims 16 to 20, wherein a proportion of a specific surface area per unit volume after grinding (cs2) to the specific surface area per unit volume before grinding (cs1) of the foodstuff containing insoluble dietary fibers (cs2/cs1) is 5 times or less after ultrasonication using a laser diffraction particle size distribution analyzer and using ethanol as a measuring solvent.

## INTERNATIONAL SEARCH REPORT

| International application No. |
| --- |
| PCT/JP2020/030826 |

A.    CLASSIFICATION OF SUBJECT MATTER
Int.Cl. A23L7/126(2016.01)i, A23L19/00(2016.01)i, A23L33/22(2016.01)i
FI: A23L33/22, A23L7/126, A23L19/00

According to International Patent Classification (IPC) or to both national classification and IPC

B.    FIELDS SEARCHED

Minimum documentation searched (classification system followed by classification symbols)
Int.Cl. A23L7/126, A23L19/00-19/15, A23L33/22

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)
JSTPlus/JMEDPlus/JST7580(JDreamIII),
FSTA/CAplus/WPIDS/AGRICOLA/BIOSIS/MEDLINE/EMBASE(STN), 日経テレコン(Nikkei Telecom)

C.    DOCUMENTS CONSIDERED TO BE RELEVANT

| Category* | Citation of document, with indication, where appropriate, of the relevant passages | Relevant to claim No. |
| --- | --- | --- |
| X | JP 6582304 B1 (MIZKAN HOLDINGS CO., LTD.) 02.10.2019 (2019-10-02), claims, examples, paragraph [0097] | 1-21 |
| A | 「ZENB initiative」の取り組みから新ブランド「ZENB」誕生－３月５日（火）、EC サイトをオープンし、新商品販売開始！－, MIZKAN NEWSRELEASE R18036, pp. 1, 2, 2019.02.28 (online), retrieved on 06 October 2020, retrieved from the internet: <http:www.mizkan.co.jp/company/newsrelease/2018news/pdf/R18036.pdf>, text, non-official translation (New brand "ZENB" is born from an activity of "ZENB initiative" -On March 5th (Tuesday), the EC site will open and new products will be on sale!-) | 1-21 |

☐   Further documents are listed in the continuation of Box C.          ☒   See patent family annex.

| | |
| --- | --- |
| *       Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| 06.10.2020 | 20.10.2020 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

<table>
<tr><td colspan="2" align="center">**INTERNATIONAL SEARCH REPORT**<br>Information on patent family members</td><td>International application No.<br><br>PCT/JP2020/030826</td></tr>
</table>

```
JP 6582304 B1        02.10.2019    US 2020/0187543 A1
                                   claims, examples, paragraph [0109]
                                   WO 2019/193780 A1
                                   EP 3639679 A1
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012105574 A

- WO 2015163135 A